# EUROPEAN PATENT APPLICATION

(11) **EP 4 300 245 A1**
(43) Date of publication of application: **03.01.2024**
(21) Application number: 23178628.6
(22) Date of filing: 12.06.2023
(51) Int. Cl.: G05D 1/02, G05D 1/00, A01B 69/00, B60W 30/00

(54) **AUTONOMOUS TRAVEL METHOD, AUTONOMOUS TRAVEL SYSTEM, AND AUTONOMOUS TRAVEL PROGRAM**

(30) Priority: 30.06.2022 JP 2022106004
(71) Applicant: Yanmar Holdings Co., Ltd., Osaka-shi, Osaka (JP)
(72) Inventor: NISHII, Yasuto, Okayama-shi (JP); MURAYAMA, Masaaki, Okayama-shi (JP); KURODA, Akifumi, Okayama-shi (JP); NISHIBEPPU, Shinya, Okayama-shi (JP); ADACHI, Masahito, Okayama-shi (JP)
(74) Representative: Dennemeyer & Associates S.A.

(57) **Abstract**

[Problem] To provide an autonomous travel method, an autonomous travel system, and an autonomous travel program capable of improving a traveling efficiency of a work vehicle which autonomously travels between multiple areas.

[Solution] The detection process unit 172 detects obstacles while the work vehicle 10 is traveling on the road R0 connecting the fields F1 and F2. The travel processor 111 causes the work vehicle 10 to perform avoidance travel when the obstacles are registered as the avoidance travel target that is a subject to be avoided by the work vehicle 10's avoidance travel, while it causes the work vehicle 10 not to perform the avoidance travel when the obstacles are registered as the non-avoidance travel target that is a subject not to be avoided by the work vehicle 10's avoidance travel.

## Description

### TECHNICAL FIELD

The present disclosure relates to an autonomous travel method, an autonomous travel system, and an autonomous travel program for causing a work vehicle to autonomously travel.

### BACKGROUND ART

Conventionally, work vehicles, which can perform work while autonomously traveling within a field or autonomously travel between multiple fields, have been known. For example, a technology, in which a work vehicle determines a movable route from one field to another field and displays it on the operator's operation terminal, is known (see, for example, Patent Document 1).

### PRIOR ART DOCUMENT

### PATENT DOCUMENT

Patent Document 1: Japanese Patent Laid-open Publication No. 2021-29218

### SUMMARY OF INVENTION

### TECHNICAL PROBLEM

Meanwhile, a work vehicle equipped with a sensor that detects an obstacle (obstacle sensor), and when the obstacle sensor detects the obstacle, the work vehicle performs avoidance travel process (travel restriction process), such as decelerating and stopping, to avoid colliding with the obstacle. If such an avoidance traveling process is applied uniformly, for example, when the work vehicle autonomously travels along a predetermined inter-field route on a farm road or public road, etc. and a fixed object such as a tree is detected as an obstacle, the aforementioned avoidance travel process is executed even though there is no risk of collision as long as the vehicle travels along the inter-field route. This results in a problem that reduces traveling efficiency.

An object of the present disclosure is to provide an autonomous travel method, an autonomous travel system, and an autonomous travel program capable of improving a traveling efficiency of a work vehicle autonomously traveling between multiple areas.

### SOLUTION TO PROBLEM

An autonomous travel method of the present disclosure includes: detecting an object to be detected while a work vehicle is traveling on a connecting road that connects a first area and a second area; and causing the work vehicle to perform avoidance travel when the object to be detected is registered as an avoidance travel target that is a subject to be avoided by the work vehicle in avoidance travel thereof, and causing the work vehicle not to perform the avoidance travel when the object to be detected is registered as a non-avoidance travel target that is a subject not to be avoided by the work vehicle in avoidance travel thereof.

An autonomous travel system of the present disclosure includes a detection processor and a travel processor. The detection processor detects an object to be detected while a work vehicle is traveling on a connecting road that connects a first area and a second area. The travel processor causes the work vehicle to perform avoidance travel when the object to be detected is registered as an avoidance travel target that is a subject to be avoided by the work vehicle in avoidance travel thereof, while it causes the work vehicle not to perform the avoidance travel when the object to be detected is registered as a non-avoidance travel target that is a subject not to be avoided by the work vehicle in avoidance travel thereof.

An autonomous travel program of the present disclosure is a program for causing one or more processors to execute a procedure including: detecting an object to be detected while a work vehicle is traveling on a connecting road that connects a first area and a second area; and causing the work vehicle to perform avoidance travel when the object to be detected is registered as an avoidance travel target that is a subject to be avoided by the work vehicle in avoidance travel thereof, and causing the work vehicle not to perform the avoidance travel when the object to be detected is registered as a non-avoidance travel target that is a subject not to be avoided by the work vehicle in avoidance travel thereof.

### ADVANTAGEOUS EFFECTS OF INVENTION

According to the present disclosure, it is possible to provide an autonomous travel method, an autonomous travel system, and an autonomous travel program capable of improving a traveling efficiency of a work vehicle autonomously traveling between multiple areas.

### BRIEF DESCRIPTION OF DRAWINGS

FIG. 1 is a block diagram illustrating a configuration of an autonomous travel system according to an embodiment of the present disclosure,
FIG. 2 is an external view illustrating an example of a work vehicle according to the embodiment of the present disclosure,
FIG. 3 is a diagram illustrating an example of an inter-field route of the work vehicle according to the embodiment of the present disclosure,
FIG. 4A is a diagram illustrating an example of a target route of the work vehicle in a field according to the embodiment of the present disclosure,
FIG. 4B is a diagram illustrating an example of a target route of the work vehicle in another field according to the embodiment of the present disclosure,
FIG. 5 is a diagram illustrating an example of a detection area of an obstacle sensor installed on the work vehicle according to the embodiment of the present disclosure,
FIG. 6 is a diagram illustrating an example of a menu screen displayed on an operation terminal according to the embodiment of the present disclosure,
FIG. 7A is a diagram illustrating an example of a teaching operation screen displayed on the operation terminal according to the embodiment of the present disclosure,
FIG. 7B is a diagram illustrating another example of a teaching operation screen displayed on the operation terminal according to the embodiment of the present disclosure,
FIG. 8A is a diagram illustrating another example of a teaching operation screen displayed on the operation terminal according to the embodiment of the present disclosure,
FIG. 8B is a diagram illustrating another example of a teaching operation screen displayed on the operation terminal according to the embodiment of the present disclosure,
FIG. 8C is a diagram illustrating another example of a teaching operation screen displayed on the operation terminal according to the embodiment of the present disclosure,
FIG. 9 is a diagram illustrating an example of an inter-field route information table according to the embodiment of the present disclosure,
FIG. 10A is a diagram illustrating another example of a teaching operation screen displayed on the operation terminal according to the embodiment of the present disclosure,
FIG. 10B is a diagram illustrating another example of a teaching operation screen displayed on the operation terminal according to the embodiment of the present disclosure,
FIG. 11 is a diagram illustrating an example of an obstacle information table according to the embodiment of the present disclosure,
FIG. 12 is a diagram showing an example of an inter-field route according to the embodiment of the present disclosure,
FIG. 13 is a diagram illustrating an example of a route generation screen displayed on the operation terminal according to the embodiment of the present disclosure,
FIG. 14 is a flowchart illustrating an example of a procedure of an autonomous travel process (setting process) executed by the autonomous travel system according to the embodiment of the present disclosure,
FIG. 15 is a flowchart illustrating an example of a procedure of an autonomous travel process (teaching process) executed by the autonomous travel system according to the embodiment of the present disclosure,
FIG. 16 is a flowchart illustrating an example of a procedure of an autonomous travel process (traveling control process) executed by the autonomous travel system according to the embodiment of the present disclosure,
FIG. 17 is a diagram illustrating an example of the teaching operation screen displayed on the operation terminal according to another embodiment of the present disclosure,
FIG. 18A is a diagram illustrating an example of obstacles according to the embodiment of the present disclosure,
FIG. 18B is a diagram illustrating an example of the teaching operation screen displayed on the operation terminal according to another embodiment of the present disclosure,
FIG. 19A is a diagram illustrating an example of obstacles according to another embodiment of the present disclosure,
FIG. 19B is a diagram illustrating another example of the teaching operation screen displayed on the operation terminal according to another embodiment of the present disclosure,
FIG. 20 is a diagram illustrating an example of a travel screen displayed on the operation terminal according to another embodiment of the present disclosure,
FIG. 21 is a diagram illustrating another example of the travel screen displayed on the operation terminal according to another embodiment of the present disclosure,
FIG. 22 is a diagram illustrating another example of the inter-field route according to the embodiment of the present disclosure, and
FIG. 23 is a diagram illustrating one example of a field and a target route according to another embodiment of the present disclosure.

### DESCRIPTION OF EMBODIMENTS

Embodiments described below are specific examples that embody the present disclosure and are not intended to limit the technical scope of the present disclosure.

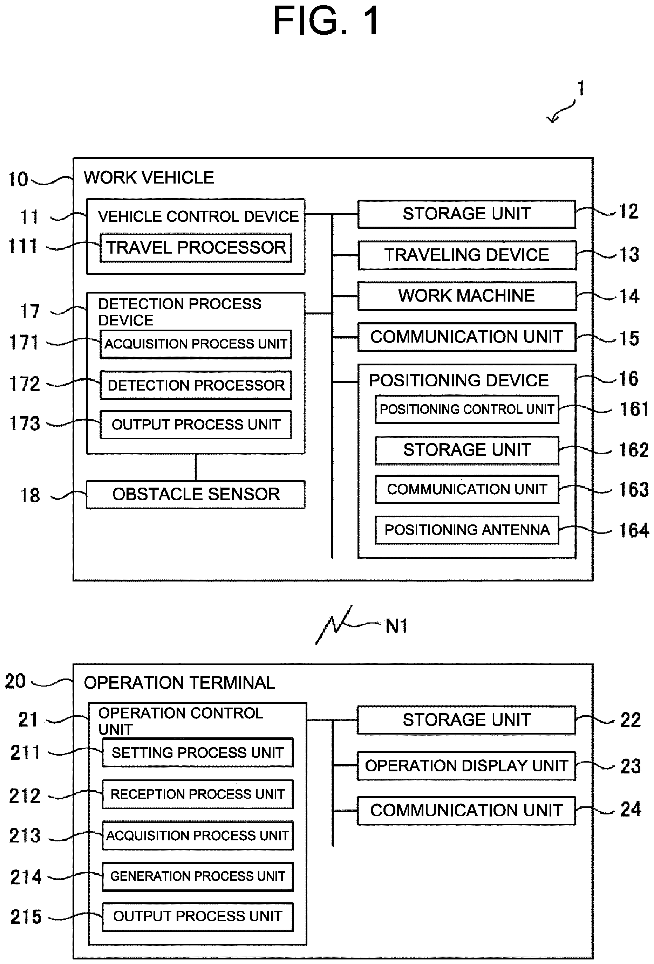

As illustrated in FIG. 1, an autonomous travel system 1 according to an embodiment of the present disclosure includes a work vehicle 10 and an operation terminal 20. The work vehicle 10 and the operation terminal 20 can communicate with each other via a communication network N1. For example, the work vehicle 10 and the operation terminal 20 can communicate with each other via a mobile phone line network, a packet line network, or a wireless LAN.

In this embodiment, a case where the work vehicle 10 is a tractor will be described as an example. As another embodiment, the work vehicle 10 may be a rice transplanter, a combine, a construction machine, a snowplow, or the like. The work vehicle 10 is provide with a configuration capable of traveling autonomously (autonomous travel) within a field in accordance with a predetermined target route. In addition, the work vehicle 10 can perform predetermined work while traveling autonomously in the field. Furthermore, the work vehicle 10 is configured to travel autonomously along a road connecting multiple fields (connecting road) according to a preset inter-field route. On the basis of current position information of the work vehicle 10 to be calculated by a positioning device 16, the work vehicle 10 travels autonomously in accordance with the target route and the inter-field route that are preset inside the field and outside the field (road).

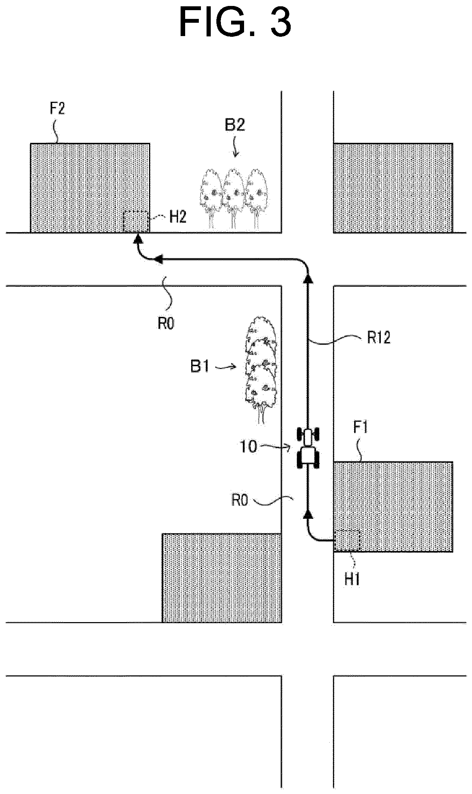

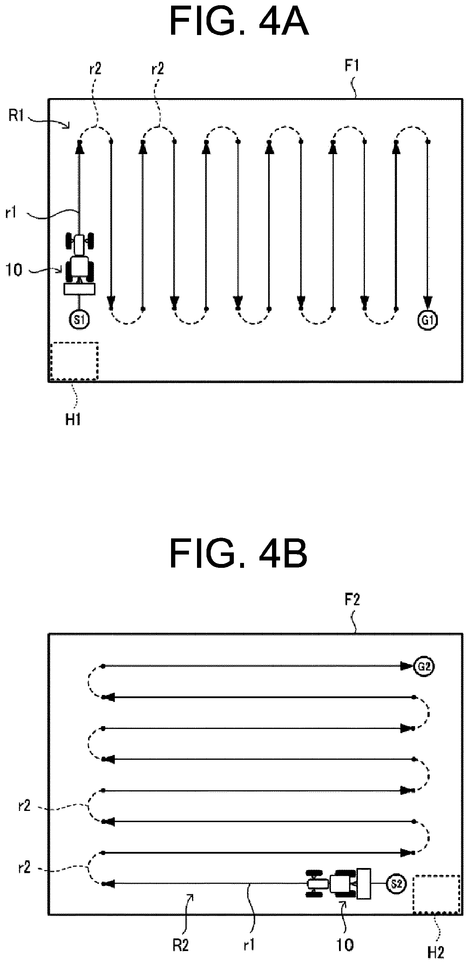

For example, the work vehicle 10 performs a predetermined work in a field F1 shown in FIG. 3 and FIG. 4A while traveling autonomously along a preset target route R1 (work route). When the work in the field F1 is completed, the work vehicle 10 autonomously travels along a preset inter-field route R12 (moving route) on a road R0 to move to a field F2. For example, the work vehicle 10 autonomously travels along the inter-field route R12 that connects an entrance/exit H1 of the field F1 with an entrance/exit H2 of the field F2. When the work vehicle 10 arrives at the field F2, it performs the predetermined work in the field F2 (see FIGs. 3 and 4B) while traveling autonomously along a preset target route R2 (work route). The target route R1 in the field F1 and the target route R2 in the field F2 are set as appropriate according to task contents thereof, respectively. The inter-field route R12 of a road R0 is set according to operation by an operator (user) (teaching operation). In the present embodiment, although the inter-field route R12 on the road R0, along which the work vehicle 10 travels from the field F1 to the field F2, is describe as an example, the inter-field route R12 may be a route on the road R0 along which the work vehicle 10 travels from the field F2 to the field F1. When the work vehicle 10 travels over three or more fields in sequence, the inter-field routes may be set up for each pair of the fields. The inter-field route R12 is an example of an inter-field route of the present disclosure. The inter-area route of the present disclosure may not be a route for traveling between the fields (inter-field route), but a route only for traveling between a first point and a second point on the road R0 (point-to-point route).
The first and second points may be locations designated by the user on a map.

The connecting road may be a work vehicle dedicated road or a general vehicle (e.g., passenger vehicle) travelable road, such as a farm road, a forest road, a public road, a private road, a motorway, and the like.

### Work Vehicle 10

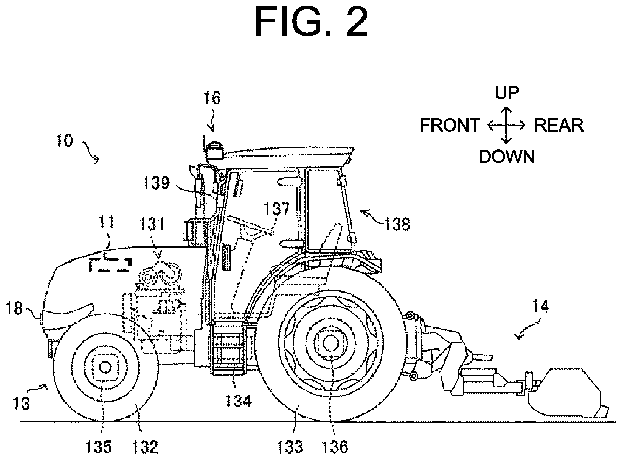

As illustrated in FIGS. 1 and 2, the work vehicle 10 includes a vehicle control device 11, a storage unit 12, a traveling device 13, a work machine 14, a communication unit 15, a positioning device 16, a detection process device 17, an obstacle sensor 18, and the like. The vehicle control device 11 is electrically connected to the storage unit 12, the traveling device 13, the work machine 14, the positioning device 16, the detection process device 17, and the like. The vehicle control device 11 and the positioning device 16 may be capable of performing wireless communication. The obstacle sensor 18 is electrically connected to the detection process device 17.

The communication unit 15 is a communication interface that connects the work vehicle 10 to the communication network N1 by wire or wirelessly, thereby to perform a data communication according to a predetermined communication protocol with external devices such as the operation terminal 20 via the communication network N1. The work vehicle 10 can communicate wirelessly with the operation terminal 20 via the communication unit 15.

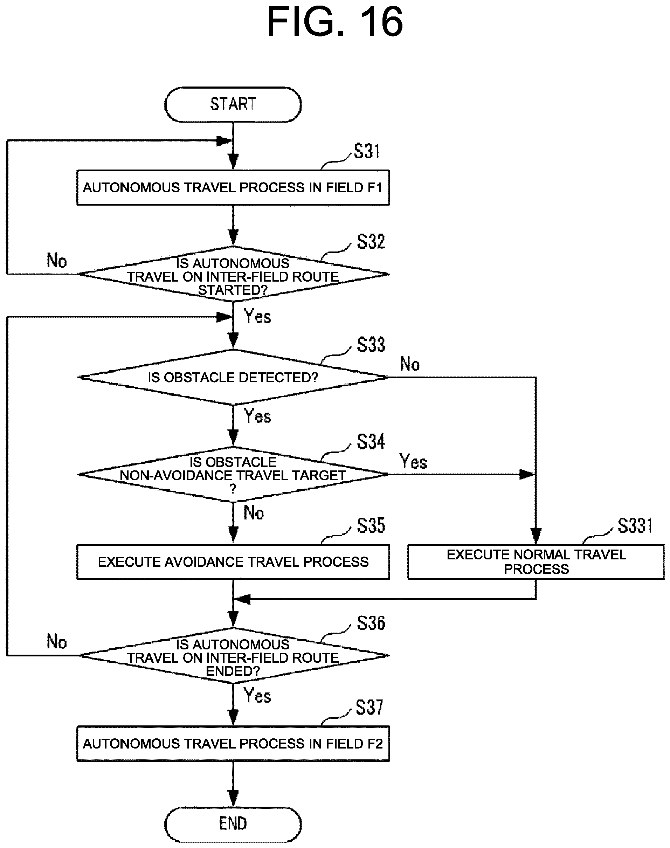

The storage unit 12 is a non-volatile storage unit such as a HDD (hard disk drive ) or a SSD (solid state drive) that stores various pieces of information. The storage unit 12 stores a control program such as an autonomous travel program for causing the vehicle control device 11 to execute an autonomous travel process described below (see FIG. 16). For example, the autonomous travel program is non-temporarily recorded in a computer-readable recording medium such as a flash ROM, an EEPROM, a CD or a DVD, read by a predetermined reading device (not shown), and stored in the storage unit 12. The autonomous travel program may be downloaded from a server (not shown) to the work vehicle 10 via the communication network N1 to be stored in the storage unit 12. In addition, the storage unit 12 may store the target route and the inter-field route that are generated at the operation terminal 20.

The traveling device 13 is a driving unit that causes the work vehicle 10 to travel. As shown in FIG. 2, the traveling device 13 has an engine 131, a front wheel 132, a rear wheel 133, a transmission 134, a front axle 135, a rear axle 136, a steering wheel 137, and the like. A pair of front wheels 132 and a pair of rear wheels 133 are provided on each side of the work vehicle 10. Furthermore, the traveling device 13 is not limited to be of the wheel type including the front wheels 132 and the rear wheels 133 but may also be of a crawler type including crawlers provided on each side of the work vehicle 10.

The engine 131 is a driving source such as a diesel engine and a gasoline engine that are driven using fuel supplied in a fuel tank (not shown). The traveling device 13 may include an electric motor as the driving source together with the engine 131 or in place of the engine 131. A generator (not shown) is connected to the engine 131, and electric power is supplied from the generator to electrical components such as the vehicle control device 11, a battery, and the like which are provided in the work vehicle 10. The battery is charged by the electric power supplied from the generator. Then, the electric components such as the vehicle control device 11 and the positioning device 16 provided on the work vehicle 10 can be driven by the electric power supplied from the battery even after the engine 131 is stopped.

Driving force of the engine 131 is transmitted to the front wheels 132 via the transmission 134 and the front axle 135, and is transmitted to the rear wheels 133 via the transmission 134 and the rear axle 136. The driving force of the engine 131 is also transmitted via a PTO shaft (not shown) to the work machine 14. When the work vehicle 10 performs autonomous travel, the traveling device 13 performs traveling operation according to an instruction from the vehicle control device 11.

Examples of the work machine 14 include a mower, a cultivator, a plow, a fertilizer, a seeding machine, a spraying machine, and the work machine 14 is detachable to/from the work vehicle 10. This allows the work vehicle 10 to perform various types of work by using different work machines 14. In the present embodiment, an example, in which the work machine 14 is the mower, is described.

For example, the work vehicle 10 is equipped with a directly-mounted-type work machine 14 (mower) and performs mowing operation while traveling in each of the field F1 and the field F2. The work machine 14 is not limited to the directly-mounted-type work machine that is secured to the work vehicle 10, and may be a towed-type work machine that is towed by the work vehicle 10.

When traveling on the road R0 (see FIG. 3), the work vehicle 10 may travel with the work machine 14 attached thereto or with the work machine 14 removed therefrom. For example, when the work vehicle 10 performs the mowing operation in each of the field F1 and the field F2, after the mowing operation in the field F1 is completed, the work vehicle 10 travels on the road R0 with the mower attached thereto, moves into the field F2, and performs the mowing operation in the field F2. When the work vehicle 10 has elevating function for the work machine 14, it can travel on the road R0 with the work machine 14 raised. For example, when performing different operations in each of the field F1 and the field F2, after the operation in the field F1 is completed, the work vehicle 10 travels on the road R0 with the work machine 14 removed therefrom, moves into the field F2, and performs operation in the field F2 with the work machine 14 attached thereto.

The obstacle sensor 18 is a sensor that detects obstacles in predetermined detection areas by using infrared, ultrasonic, or the like. For example, the obstacle sensor 18 may be a rider sensor (distance sensor) that can three-dimensionally measure a distance to an object (obstacle) to be measured using a laser or may be a sonar sensor with a plurality of sonars that can measure a distance to an object to be measured using ultrasonic waves. The obstacle sensor 18 is installed in the center front, center rear, right side, and left side of the work vehicle 10 to monitor the surrounding of the work vehicle 10 and detect obstacles. FIG. 2 shows an example in which the obstacle sensor 18 is installed in the center front of a body of the work vehicle 10. The operator can install the obstacle sensor 18 at a desired position depending on the work content.

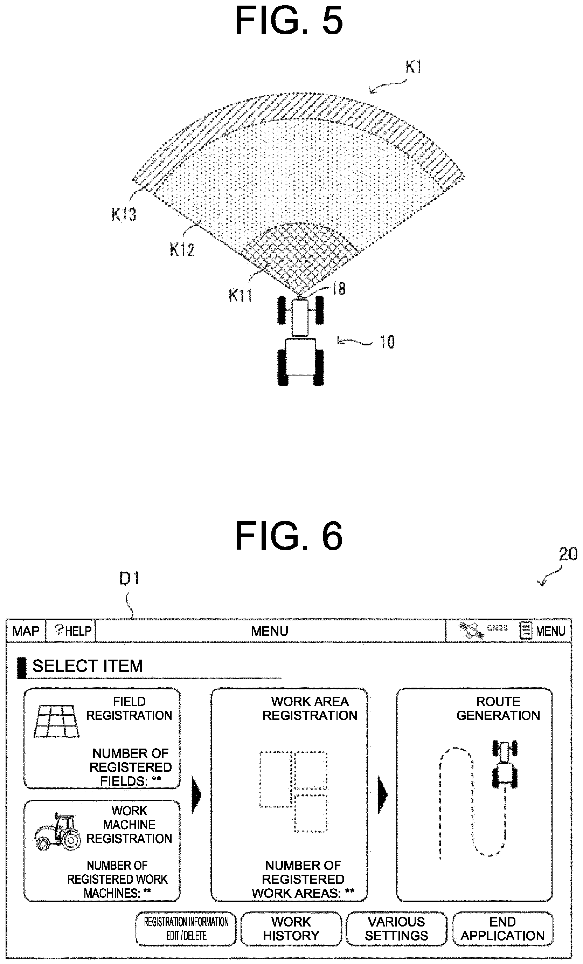

In addition, the obstacle sensor 18 is configured to be able to detect obstacles in preset detection areas. For example, it is possible to set an area to be monitored (detection area) for the obstacle sensor 18 to control travel of the work vehicle 10. For example, as shown in FIG. 5, the detection process device 17 sets a detection area K1 to be monitored for the obstacle sensor 18 installed in the center front of the work vehicle 10.

The detection area K1 includes a detection area closest to the work vehicle 10 (hereinafter, referred to as "stop area K11"), a detection area further forward than the stop area K11 ("deceleration area K12"), and a detection area further forward than the deceleration area K12 ("announcement area K13"). For example, the stop area K11 is set to a range approximately two meters forward from the work vehicle 10, the deceleration area K12 is set to a range approximately six meters forward from the stop area K11, and the announcement area K13 is set to a range approximately two meters forward from the deceleration area K12. When the obstacle sensors 18 are also installed at the center rear, the right side, and the left side of the work vehicle 10, the detection process device 17 sets a detection area to be monitored for each obstacle sensors 18.

The obstacle sensor 18 transmits measurement information (detection information) to the detection process device 17. The detection process device 17 detects the obstacles and specifies positions of the obstacles on the basis of the measurement information acquired from the obstacle sensor 18. The detection process device 17 issues an alarm externally when it detects the obstacles in the announcement area K13 while the work vehicle 10 is traveling autonomously. When the detection process device 17 detects the obstacles in the deceleration area K12 while the work vehicle 10 is traveling autonomously, the vehicle control device 11 executes a travel restriction process (avoidance travel process) to decelerate the work vehicle 10. When the detection process device 17 detects the obstacles in the stop areas K11 while the work vehicle 10 is traveling autonomously, the vehicle control device 11 executes a travel restriction process (avoidance travel process) to stop the work vehicle 10.

The detection process device 17 also outputs position information indicating the position of the identified obstacle to the operation terminal 20. For example, the detection process device 17 outputs obstacle position information to the operation terminal 20 when it detects the obstacle in the teaching operation by the operator in case of setting the inter-field route R12 (see FIG. 3). For example, the detection process device 17 outputs the obstacle position information to the operation terminal 20 when the work vehicle 10 detects the obstacle during autonomous traveling along the set target routes R1, R2 and the set inter-field route R12.

The steering wheel 137 is an operating unit operated by an operator or the vehicle control device 11. For example, with a hydraulic power steering mechanism (not shown) or the like, the traveling device 13 changes an angle of the front wheels 132 in response to the steering wheel 137's operation by the vehicle control device 11, thereby to change an advancing direction of the work vehicle 10. When the operator performs a teaching operation (details thereof will be described below), the operator operates the steering wheel 137 to manually drive the work vehicle 10.

In addition to the steering wheel 137, the traveling device 13 includes a shift lever, an accelerator, a brake, and the like (all not shown) which are operated by the vehicle control device 11. Then, in the traveling device 13, a gear of the transmission 134 is switched to a forward gear, a backward gear or the like in response to operation of the shift lever by the vehicle control device 11, and a traveling mode of the work vehicle 10 is switched to be forward, backward or the like. The vehicle control device 11 controls rotation speed of the engine 131 by operating the accelerator. Furthermore, the vehicle control device 11 operates the brakes to stop the rotation of the front wheels 132 and the rear wheels 133 using an electromagnetic brake.

The positioning device 16 is a communication device that includes a positioning control unit 161, a storage unit 162, a communication unit 163, a positioning antenna 164, and the like. For example, as shown in FIG. 2, the positioning device 16 is provided at an upper part of a cabin 138 in which an operator rides. Furthermore, an installation location of the positioning device 16 is not limited to the cabin 138. Furthermore, the positioning control unit 161, the storage unit 162, the communication unit 163, and the positioning antenna 164 of the positioning device 16 may be separately located at different positions in the work vehicle 10. Note that the battery is connected to the positioning device 16 as described above, and the positioning device 16 can operate even while the engine 131 is stopped. Moreover, a cell phone terminal, a smart phone, a tablet terminal or the like may be substituted for the positioning device 16.

The positioning control unit 161 is a computer system that includes one or more processors and storage memories, such as a nonvolatile memory, an RAM, or the like. The storage unit 162 is a non-volatile memory or the like that stores a program for causing the positioning control unit 161 to execute a positioning process, and data such as positioning information and movement information. For example, the control program is recorded in a computer-readable recording medium such as a flash ROM, an EEPROM, a CD or a DVD in a non-transitory manner, and is read by a predetermined reading device (not illustrated) to be stored in the storage unit 162. Note that the program may be downloaded from a server (not shown) to the positioning device 16 via the communication network N1 and stored in the storage unit 162.

The communication unit 163 is a communication interface that connects the positioning device 16 to the communication network N1 by wire or wirelessly, thereby to perform a data communication according to a predetermined communication protocol with external devices such as a base station (not shown) via the communication network N1.

The positioning antenna 164 is an antenna to receive a radio wave (a GNSS signal) transmitted from a satellite.

The positioning control unit 161 calculates a current position of the work vehicle 10 on the basis of the GNSS signals that the positioning antenna 164 receives from the satellite. For example, in the case where the work vehicle 10 travels autonomously in the field F1 and the field F2, or travels on the road R0 and the like upon the positioning antenna 164 receives radio waves (emission time, locus information, and the like) emitted from each one of a plurality of satellites, the positioning control unit 161 calculates a distance between the positioning antenna 164 and each of the satellites and calculates a current position (a latitude and a longitude) of the work vehicle 10 on the basis of the calculated distance. Alternatively, the positioning control unit 161 may adopt a real-time kinematic positioning method (an RTK-GPS positioning method (an RTK method)) to calculate the current location of the work vehicle 10 by using correction information that corresponds to the base station (a reference station) near the work vehicle 10. Thus, the work vehicle 10 autonomously travels using the positioning information by the RTK method. Note that the current position of the work vehicle 10 may be the same as the positioning position (the position of the positioning antenna 164, for example) or it may be a position deviated from the positioning position.

The vehicle control device 11 and the detection process device 17 are control devices such as CPUs, ROMs, and RAMs. The CPU is a processor that executes various types of arithmetic processes. The ROM is a non-volatile storage unit that stores a control program, such as a BIOS, an OS, or the like, that causes the CPU to execute various types of arithmetic processes in advance. The RAM is a volatile or non-volatile storage unit that stores various pieces of information and is used as a temporary storage memory (work area) for the various types of processes executed by the CPU. The vehicle control device 11 and the detection process device 17 control the work vehicle 10 by causing the CPU to execute the various control programs stored in the ROM or the storage unit 12 in advance.

The vehicle control device 11 controls the movement of the work vehicle 10 in accordance with various user operations to the work vehicle 10. In addition, the vehicle control device 11 executes autonomous travel process of the work vehicle 10 on the basis of a current position of the work vehicle 10 calculated by the positioning device 16, the preset target route, and the preset inter-field route.

As illustrated in FIG. 1, the detection process device 17 includes various processing units such as an acquisition process unit 171, a detection process unit 172, and an output process unit 173. The vehicle control device 11 includes various process units such as a travel processor 111. The vehicle control device 11 and the detection process device 17 causes the CPU to execute various processes in accordance with the autonomous travel program, thereby to function as the various process units. Furthermore, some or all of the process units may be constituted of an electronic circuit. The autonomous travel program may be a program for causing a plurality of processors to function as the processing units.

The acquisition process unit 171 acquires measurement information from the obstacle sensor 18. For example, the acquisition process unit 171 acquires the measurement information of the detection area K1 (see FIG. 5) from the obstacle sensor 18 installed in the center front of the work vehicle 10. For example, when an obstacle enters into the detection area K1, the acquisition process unit 171 acquires the measurement distance (the distance from the obstacle sensor 18 to the obstacle) measured by the obstacle sensor 18.

The detection process unit 172 detects the obstacle on the basis of the measurement information acquired by the acquisition process unit 171. Specifically, the detection process unit 172 determines whether or not the detection area contains the obstacle on the basis of the measurement information. The detection process unit 172 stores the detection information including the measurement information acquired from the obstacle sensor 18 in the storage unit 12. The detection information includes time information indicating the detection time, position information indicating the location of the obstacle, etc. The position information may be position coordinates indicating the location of the obstacle on the map.

The output process unit 173 outputs the detection information detected by the detection process unit 172 to the operation terminal 20. For example, the output process unit 173 outputs the position information indicating the position (position coordinates) of the obstacle to the operation terminal 20 when the detection process unit 172 detects the obstacle.

The travel processor 111 controls travel of the work vehicle 10. Specifically, the travel processor 111 causes the work vehicle 10 to start autonomous travel upon acquiring a work start command from the operation terminal 20. For example, when the operator presses down a work start button on an operation screen of the operation terminal 20, the operation terminal 20 outputs the work start instruction to the work vehicle 10. Upon obtaining the work start instruction from the operation terminal 20, the travel processor 111 causes the work vehicle 10 to start the autonomous travel. Thus, the work vehicle 10 starts the autonomous travel in accordance with the target route R1 (see FIG. 4A) in the field F1, for example and starts working by the work machine 14. The work vehicle 10 starts the autonomous travel in accordance with the target route R2 (see FIG. 4B) in the field F2, for example and starts working by the work machine 14. The work vehicle 10 also performs the autonomous travel along the inter-field route R12 (see FIG. 3) on the road R0, for example. That is, the travel processor 111 can cause the work vehicle 10 to autonomously travel along the inter-field route R12 on the road R0 outside the field. For example, the travel processor 111 causes the work vehicle 10 to autonomously travel on the road R0 that connects the field F1 and the field F2 along the inter-field route R12 set on the road R0. The target route and the inter-field route that the work vehicle 10 travels autonomously are generated at the operation terminal 20, for example. By obtaining the data of the target route and the inter-field route from the operation terminal 20, the work vehicle 10 can travel autonomously along the target route and the inter-field route.

Furthermore, the travel processor 111 causes the work vehicle 10 to stop the autonomous travel when acquiring a travel stop command from the operation terminal 20. For example, if the operator presses down the stop button on the operation screen of the operation terminal 20, the operation terminal 20 outputs a travel stop instruction to the work vehicle 10.

In addition, when the detection process device 17 detects the obstacle, the travel processor 111 executes avoidance travel process, such as decelerating and stopping, to avoid collision with the obstacle. For example, when the obstacle sensor 18 detects the obstacle in the deceleration area K12 (see FIG. 5), the travel processor 111 causes the work vehicle 10 to decelerate. When the obstacle sensor 18 detects the obstacle in the stop area K11, the travel processor 111 causes the work vehicle 10 to be stopped. When the obstacle sensor 18 detects the obstacle in the announcement area K13, the travel processor 111 does not execute the avoidance travel process, and the detection process device 17 issues an alert externally.

Meanwhile, in the conventional technology, the work vehicle 10 uniformly executes the avoidance travel process (travel restriction process) when the obstacle sensor 18 detects the obstacle. Therefore, as shown in FIG. 3, when the work vehicle 10 autonomously travels along the preset inter-field route R12 and the fixed objects such as trees B1 and B2 are detected as the obstacles, the avoidance travel process is executed even though there is no risk of collision as long as the work vehicle travels along the inter-field route R12. For example, while traveling along the inter-field route R12, when trees B1 are detected, the work vehicle 10 decelerates, or when trees B2 are detected, the work vehicle 10 is stopped. This results in a problem that reduces traveling efficiency due to unsmooth movement between fields. In contrast, the autonomous travel system 1 according to the present embodiment can improve the work efficiency in the work vehicle 10 that travels autonomously between multiple fields, as described below.

### Operation Terminal 20

As illustrated in FIG. 1, the operation terminal 20 is an information process device that includes an operation control unit 21, a storage unit 22, an operation display unit 23, and a communication unit 24. The operation terminal 20 may consist of a portable terminal, such as a tablet terminal or a smartphone.

The communication unit 24 is a communication interface that connects the operation terminal 20 to the communication network N1 by wire or wirelessly, thereby to perform a data communication according to a predetermined communication protocol with external devices such as one or more work vehicles 10 via the communication network N1.

The operation display unit 23 is a user interface including a display unit, such as a liquid crystal display or an organic EL display, that displays various pieces of information and an operating unit, such as a touch panel, a mouse, or a keyboard, that receives operations. On an operation screen displayed on the display unit, an operator can operate the operating unit to register various pieces of information (such as work vehicle information, field information, and work information, which will be described later).

The operator can also operate the operating unit to set the inter-field route R12 (teaching operation) for causing the work vehicle 10 to travel autonomously on the road R0 (connecting road) connecting the field F1 and the field F2.

Furthermore, the operator can also operate the operating unit to provide the work vehicle 10 with the travel starting command, the travel stopping command, and the like. Furthermore, in a place away from the work vehicle 10, the operator can grasp from a traveling trajectory displayed on the operation terminal 20 a traveling state in which the work vehicle 10 travels autonomously in the fields F1 and F2 and on the road R0 in accordance with the target route and the inter-field route.

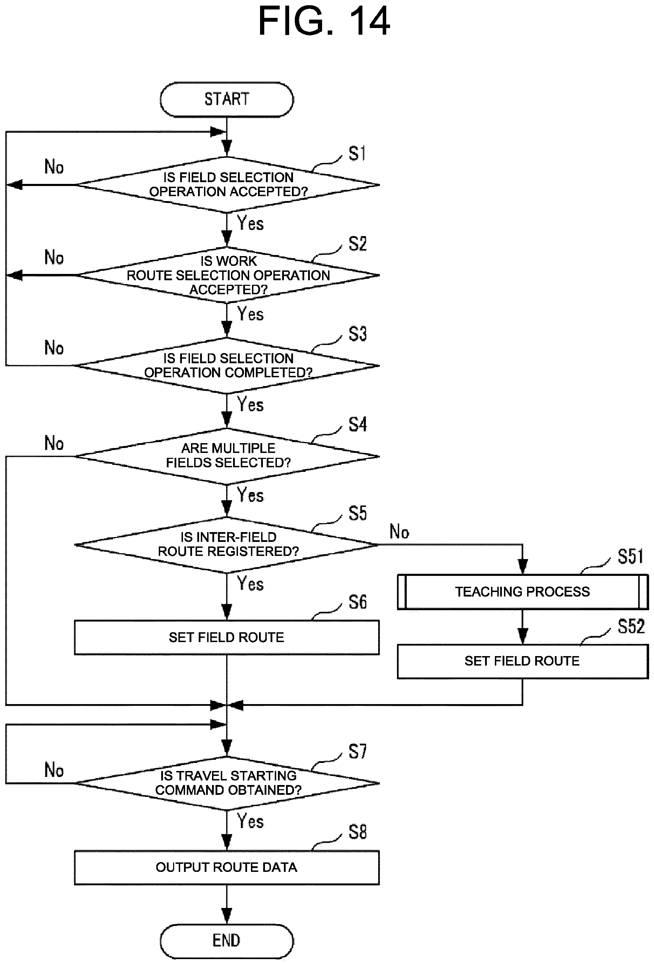

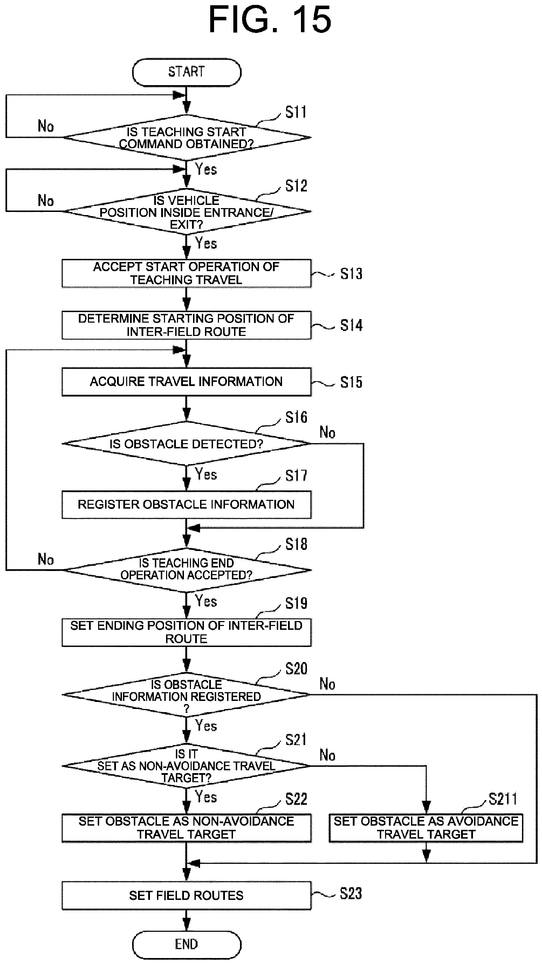

The storage unit 22 is a non-volatile storage unit such as an HDD or an SSD that stores various pieces of information. The storage unit 22 stores a control program such as an autonomous travel program for causing the operation control unit 21 to execute the autonomous travel process (see FIGS. 14 and 15) described later. For example, the autonomous travel program is non-temporarily recorded in a computer-readable recording medium such as a flash ROM, an EEPROM, a CD or a DVD, read by a predetermined reading device (not shown), and stored in the storage unit 22. The autonomous travel program may be downloaded from a server (not illustrated) via the communication network N1 to the operation terminal 20 and stored in the storage unit 22.

Furthermore, a dedicated application for causing the work vehicle 10 to travel autonomously is installed in the storage unit 22. The operation control unit 21 activates the dedicated application and executes setting process of various pieces of information associated with the work vehicle 10, and generation process of the target route and the inter-field route for the work vehicle 10, and issues an autonomous travel instruction to the work vehicle 10.

The storage unit 22 also stores data such as work vehicle information associated with the work vehicle 10 and target route information associated with the target route. The work vehicle information includes information such as a vehicle number and a vehicle model for each work vehicle 10. The vehicle number is identification information of the work vehicle 10. The vehicle model is a vehicle model of the work vehicle 10. Note that the storage unit 22 may store either the work vehicle information associated with one work vehicle 10 or the work vehicle information associated with a plurality of work vehicles 10. For example, in a case where a particular operator owns a plurality of work vehicles 10, the storage unit 22 stores the work vehicle information associated with each of the work vehicles 10.

The target route information includes information such as a route name, a field name, an address, a field area size, and a work time for each target route. The route name is a route name of the target route generated at the operation terminal 20. The field name is a name of a field to be worked, for which the travel route is set. The address is an address of the field and the field area size is size of the field area. The work time is a time required to work the field by the work vehicle 10.

In a case where the target route is a route corresponding to the road R0 (inter-field route), the target route information includes information, such as a route name, an address, a travel distance, and a travel time. The route name is a name of the road R0 and the address is an address of the road R0. The travel distance is a distance in which the work vehicle 10 travels on the road R0, and it is a distance from the field F1 to the field F2, for example. The travel time is a time period during which the work vehicle 10 travels on the road R0, and it is a time period required for the work vehicle to move from the field F1 to the field F2, for example.

The storage unit 22 may store either the target route information associated with one target route R or the target route information associated with a plurality of target routes. For example, in a case where a particular operator generates a plurality of target routes for one or more fields owned by the operator, the target route information associated with each of target routes is stored in the storage unit 22. It is noted that either one target route or a plurality of target routes may be set for a single field. Furthermore, either one inter-field route or a plurality of inter-field routes may be set for a single field. In the present embodiment, the storage unit 22 stores the target route information corresponding to the target route R1 for traveling in the field F1 (see FIG. 4A), the target route information corresponding to the target route R2 for traveling in the field F2 (see FIG. 4B), and the target route information corresponding to the inter-field route R12 for traveling on the road R0 (see FIG. 3).

As another embodiment, some or all of the information such as the work vehicle information and the target route information may be stored in a server accessible from the operation terminal 20. The operator may perform an operation for registering the work vehicle information and the target route information in the server (e.g., a personal computer, a cloud server, and the like). In this case, the operation control unit 21 may acquire the information from the server and execute each process such as the autonomous travel process (see FIGS. 14 and 15) described later.

The operation control unit 21 has control devices such as a CPU, a ROM, and a RAM. The CPU is a processor that executes various types of arithmetic processes. The ROM is a non-volatile storage unit that stores a control program, such as a BIOS, an OS, or the like, that causes the CPU to execute various types of arithmetic processes in advance. The RAM is a volatile or non-volatile storage unit that stores various pieces of information and is used as a temporary storage memory for the various processes executed by the CPU. The operation control unit 21 controls the operation terminal 20 by causing the CPU to execute various types of control programs stored in advance in the ROM or the storage unit 22.

As illustrated in FIG. 1, the operation control unit 21 includes various process units such as a setting process unit 211, a reception process unit 212, an acquisition process unit 213, a generation process unit 214, and an output process unit 215. The operation control unit 21 functions as the various processing units by causing the CPU to execute the various types of processes according to the control programs. Furthermore, some or all of the process units may be constituted of an electronic circuit. Note that the control program may be the program that causes a plurality of processors to function as the process units.

The setting process unit 211 sets information associated with the work vehicle 10 (hereinafter, referred to as work vehicle information), information associated with the field (hereinafter, referred to as field information), and information associated with the specific way how to perform work (hereinafter, referred to as work information). The setting process unit 211 receives setting operations from the operator on the setting screen D1 illustrated in FIG. 6 to register each setting information, for example.

Specifically, by allowing the operator to perform the registration operation on the operation terminal 20, the vehicle setting process unit 211 sets information associated with the model of the work vehicle 10, the position where the positioning antenna 164 is mounted on the work vehicle 10, the type of the work machine 14, the size and the shape of the work machine 14, the position of the work machine 14 with respect to the work vehicle 10, the vehicle speed and the engine rotation speed of the work vehicle 10 during work, the vehicle speed and the engine rotation speed of the work vehicle 10 during turning, etc.

In addition, by allowing the operator to perform registration operation on the operation terminal 20, the setting process unit 211 sets information associated with the position and the shape of the field, the work start position to start work (travel start position), the work end position to finish work (travel end position), and the work direction, etc.

For example, one operator who rides on the work vehicle 10 drives so as to circle once around an outer periphery of the field, and records a transition of position information of the positioning antenna 164 at that time, so that the information associated with the position and the shape of the field can be obtained autonomously. Furthermore, the position and the shape of the field can be acquired on the basis of a polygon shape obtained by allowing the operator to operate the operation terminal 20 with a map displayed on the operation terminal 20 and designate a plurality of points on the map. A region specified by the obtained position and the shape of the field is a region (travel region) where the work vehicle 10 can travel.

For example, the setting process unit 211 registers the field information for the field F1 shown in FIG. 4A and the field information for the field F2 shown in FIG. 4B.

The setting process unit 211 is configured to set, as the work information, presence or absence of cooperative work between the work vehicle 10 (unmanned tractor) and the manned work vehicle 10, the skip number, which is the number of work routes skipped when the work vehicle 10 turns in the headland, the width of the headland, the width of the non-cultivated land, and the like.

On the basis of the each setting information, the setting process unit 211 also generates the target route for causing the work vehicle 10 to travel autonomously in the field. Specifically, the setting process unit 211 generates the target route in the field based on the work start position and the work end position registered in the field setting. For example, as shown in FIG. 4A, the setting process unit 211 generates based on the operator's setting operation a target route R1 including the travel start position S1, travel end position G1, straight advancing route r1 (solid line in FIG. 4A), and turning route r2 (dotted line in FIG. 4A). For example, as shown in FIG. 4B, the setting process unit 211 generates based on the operator's setting operation a target route R2 including the travel start position S2, travel end position G2, straight advancing route r1 (solid line in FIG. 4B), and turning route r2 (dotted line in FIG. 4B). The setting process unit 211 registers the generated target route R1 in association with the field F1 and registers the generated target route R2 in association with the field F2.

Here, the operation control unit 21 generates the inter-field route of the road R0 connecting between multiple fields based on operations (teaching operations) by the operator, as described below.

Specifically, the reception process unit 212 accepts the operator's travel operation. For example, the reception process unit 212 accepts the travel operation to cause the work vehicle 10 to travel manually from the field F1 to the field F2 (manual steering). The acquisition process unit 213 acquires from the positioning device 16 the position information of the work vehicle 10 which are traveling on the road R0 that connects the field F1 and the field F2 based on the travel operation by the operator. When the work vehicle 10, which are traveling on the road R0 that connects the field F1 and the field F2 based on the travel operation by the operator, detects the obstacles, the acquisition process unit 213 acquires the detection information (position information of the obstacles) from the detection process device 17.

The generation process unit 214 generates the inter-field route R12 for causing the work vehicle 10 to travel autonomously between the field F1 and the field F2 based on the position information of the work vehicle 10 and the position information of the obstacles, which are obtained based on the travel operation by the operator.

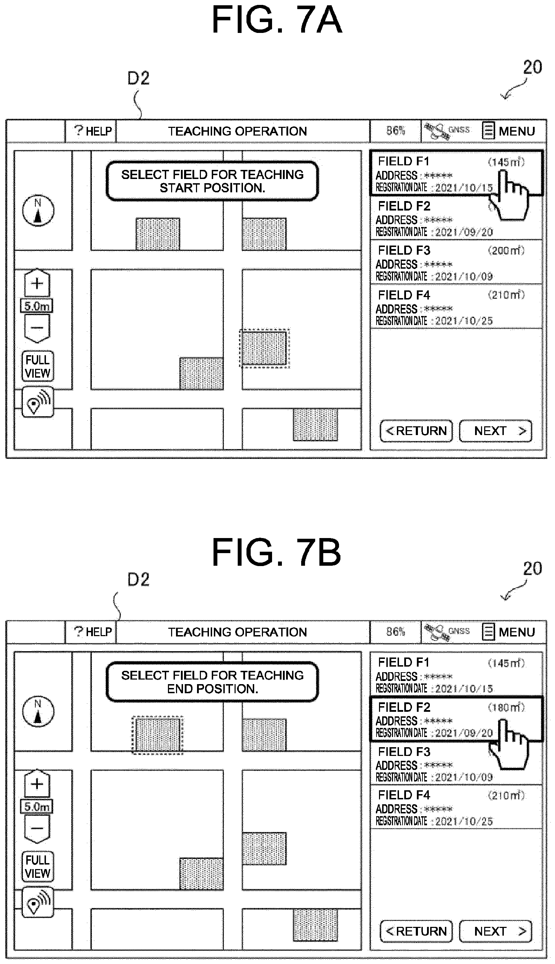

For example, the reception process unit 212 causes the teaching operation screen D2 shown in FIG. 7A to display and accept selecting operations of the fields from the operator. The teaching operation screen D2 displays a list of the field information of a plurality of fields registered by the setting process unit 211. The operator selects the plurality of fields to be targets of the inter-field route on the teaching operation screen D2.

First, the operator selects the field where the teaching operation is started (here, the field F1) (see FIG. 7A). When the operator selects the field F1, the reception process unit 212 causes the teaching operation screen D2 to display the selected field F1 identifiably on the map (dotted frame image) (see FIG. 7A).

Next, the operator selects the field where the teaching operation is ended (here, the field F2) (see FIG. 7B). Upon the operator selects the field F2, the reception process unit 212 causes the teaching operation screen D2 to display the selected field F2 identifiably on the map (dotted line frame image) (see FIG. 7B).

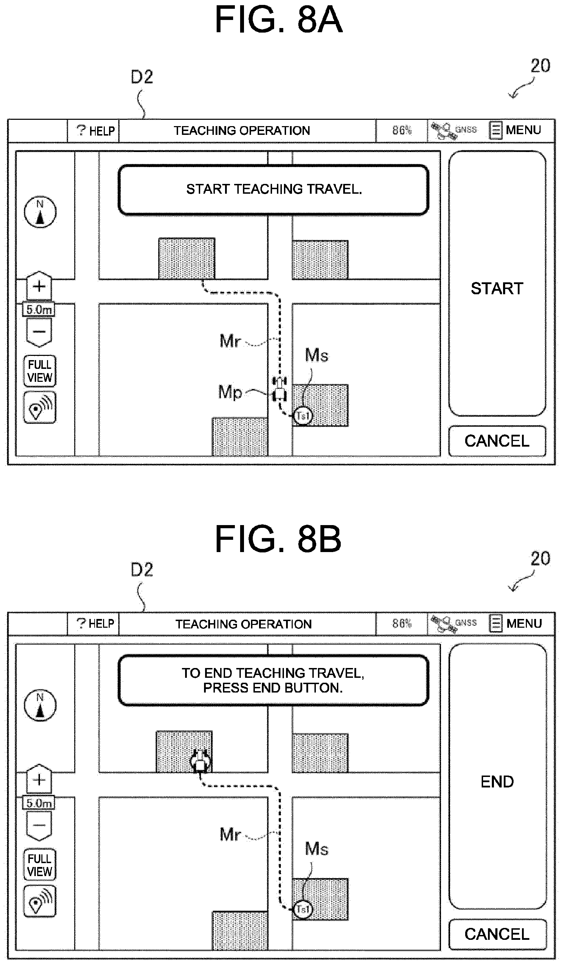

Upon the reception process unit 212 accepts the selecting operation of the plurality of fields where the inter-field route is to be set from the operator, it accepts starting operation of the teaching travel. For example, on the teaching operation screen D2 illustrated in FIG. 8A, when the operator presses down a start button, the reception process unit 212 accepts the starting operation of the teaching travel. Upon the reception process unit 212 accepts the starting operation, it sets a route start position Ts1 in the field F1. For example, the reception process unit 212 sets the current position of the work vehicle 10 at the time when the starting operation is accepted as the route start position Ts1.

As another embodiment, the reception process unit 212 may set the route start position Ts1 in the field F1 in the case where the starting operation is received from the operator in a state where the work vehicle 10 is located in a predetermined area in the field F1. For example, provided that the work vehicle 10 is located in an area of an entrance/exit H1 in the field F1(see FIG. 4A), the reception process unit 212 accepts the starting operation from the operator and sets the route start position Ts1 in the field F1. In contrast, in a case where the work vehicle 10 is located outside the area of the entrance/exit H1 in the field F1, the reception process unit 212 does not set the route start position Ts1 in the field F1 even when the reception process unit 212 accepts the starting operation from the operator. In this case, the reception process unit 212 may notify a message indicating that the route start position Ts1 cannot be set, a message urging the work vehicle 10 to move inside the area of the entrance/exit H1, and the like. According to this configuration, the start position of the inter-field route for moving between the fields can be set in a specific area (e.g., entrance/exit H1), thereby limiting the position to go outside the field from inside the field.

Upon the reception process unit 212 accepts the starting operation from the operator, it causes the teaching operation screen D2 to display a route start position image Ms in which the route start position Ts1 is indicated at the entrance/exit H1 of the field F1 on the map (see FIG. 8A). As illustrated in FIG. 8A, the reception process unit 212 displays a guide route Mr (dotted line) that connects the field F1 and the field F2 as information to support the travel operation of the teaching travel. This allows the operator to perform the manual travel operation ( manually drive) according to the guide route Mr, thereby making it easier to perform the teaching travel operation.

For example, the operator brings in the operation terminal 20 to the work vehicle 10 and manually drives the work vehicle 10 on the road R0 from the field F1 to the field F2 (see FIG. 3) while checking the guide route Mr displayed on the operation terminal 20. The reception process unit 212 accepts the travel operation (manual steering) by the operator. The reception process unit 212 causes the teaching operation screen D2 to display a current position image Mp at a position on the guide route Mr corresponding to the current position of the work vehicle 10.

The acquisition process unit 213 acquires the position information of the work vehicle 10 while the operator performs the teaching travel of the work vehicle 10 on the road R0. The acquisition process unit 213 also acquires travel speed information of the work vehicle 10 during the teaching travel. When the obstacle sensor 18 detects the obstacle during the teaching travel, the acquisition process unit 213 acquires the position information of the obstacle from the detection process device 17. During teaching travel (manually driving) by the operator, the work vehicle 10 does not perform avoidance travel (decelerating or stopping) even if the obstacles are detected. For example, in the example shown in FIG. 3, the acquisition process unit 213 acquires the respective position information of trees B1 and B2 detected by the detection process device 17 during the teaching travel. The acquisition process unit 213 may acquire information about the road R0 during the teaching travel (for example, a road surface condition, a road width, a temporary stop line, a speed limit, a traffic signal, or the like). The acquisition process unit 213 stores the acquired information in the storage unit 22.

When the operator drives the work vehicle 10 to the field F2 until the work vehicle 10 arrives at the field F2, the operator presses down the end button on the teaching operation screen D2 (see FIG. 8B). When the operator presses down the end button, the reception process unit 212 accepts ending operation of the teaching travel. When the reception process unit 212 accepts the ending operation, the reception process unit 212 sets a route end position Te2 in the field F2. For example, the reception process unit 212 sets the current position of the work vehicle 10 at the time when the ending operation is accepted as the route end position Te2.

As another embodiment, the reception process unit 212 may set the route end position Te2 in the field F2 when accepting the ending operation from the operator with the work vehicle 10 located in a predetermined area in the field F2. For example, provided that the work vehicle 10 is located within an area of the entrance/exit H2 in the field F2 (see FIG. 4B), the reception process unit 212 accepts the ending operation from the operator and sets the route end position Te2 in the field F2. In contrast, in a case where the work vehicle 10 is located outside the area of the entrance/exit H2 inside or outside the field F2, the reception process unit 212 does not set the route end position Te2 in the field F2 even when the reception process unit 212 accepts the ending operation from the operator. In this case, the reception process unit 212 may notify a message indicating that the route end position Te2 cannot be set, a message urging the work vehicle 10 to move inside the area of the entrance/exit H2, and the like. According to this configuration, the start position of the inter-field route for moving between the fields can be set in a specific area (e.g., entrance/exit H2), thereby limiting the position to go outside the field from inside the field.

Upon the reception process unit 212 accepts the ending operation from the operator, the generation process unit 214 generates the inter-field route R12 for causing the work vehicle 10 to autonomously travel between the fields F1 and F2. Here, the operation control unit 21 executes different processes between when the work vehicle 10 does not detect any obstacles during the teaching travel and when the work vehicle 10 detects the obstacles during the teaching travel.

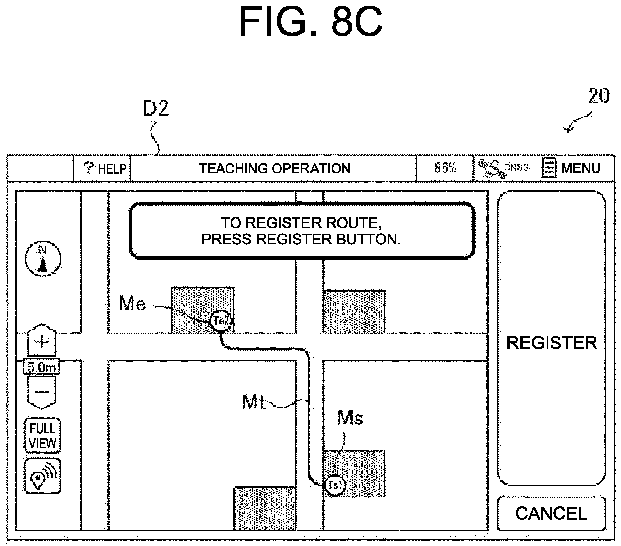

Specifically, when the work vehicle 10 does not detect any obstacles during the teaching travel, the reception process unit 212 causes the teaching operation screen D2 to display a route end position image Me indicating the route end position Te2 at the entrance/exit H2 of the field F2 on the map as shown in FIG. 8C. The generation process unit 214 generates the inter-field route R12 that connects the route start position Ts1 of the entrance/exit H1 of the field F1 and the route end position Te2 of the entrance/exit H2 of the field F2 and passes through the road R0, based on the position information of the work vehicle 10 obtained by the acquisition process unit 213. The generation process unit 214 causes the teaching operation screen D2 shown in FIG. 8C to display a route image Mt (solid line) of the generated inter-field route R12 on the map.

The generation process unit 214 notifies the operator of whether or not to register the generated inter-field route R12 on the teaching operation screen D2 illustrated in FIG. 8C. When the operator confirms the inter-field route R12 on the teaching operation screen D2 and presses down the registration button, the generation process unit 214 acquires a command to register the inter-field route R12. When the generation process unit 214 acquires the registration command, it registers the inter-field route R12 in association with the field F1 and the field F2.

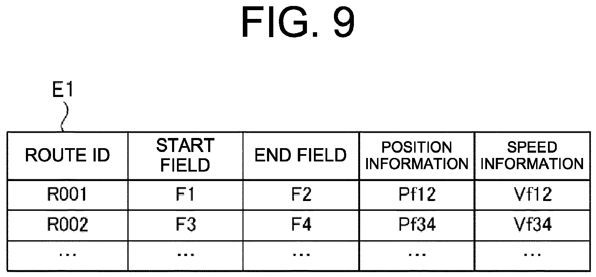

Specifically, the generation process unit 214 registers the inter-field route R12 in an inter-field route information table E1. FIG. 9 shows an example of the inter-field route information table E1. The inter-field route information table E1 includes a route ID, a start field, an end field, position information, speed information, or the like. The route ID is identification information of the inter-field route. A route ID "R001" may indicate the inter-field route R12. The start field is information indicating the field corresponding to the route start position of the inter-field route, and the end field is information indicating the field corresponding to the route end position of the inter-field route. The position information is information indicating a position of the inter-field route, and information of a coordinate position acquired at a predetermined cycle (sampling intervals). The speed information is the traveling speed of the work vehicle 10 when the work vehicle performs the teaching travel on the inter-field route, and is information about the traveling speed for each coordinate position. For every time when the operator selects multiple fields to perform the teaching operation, the generation process unit 214 registers the generated inter-field routes in association with the fields in the inter-field route information table E1.

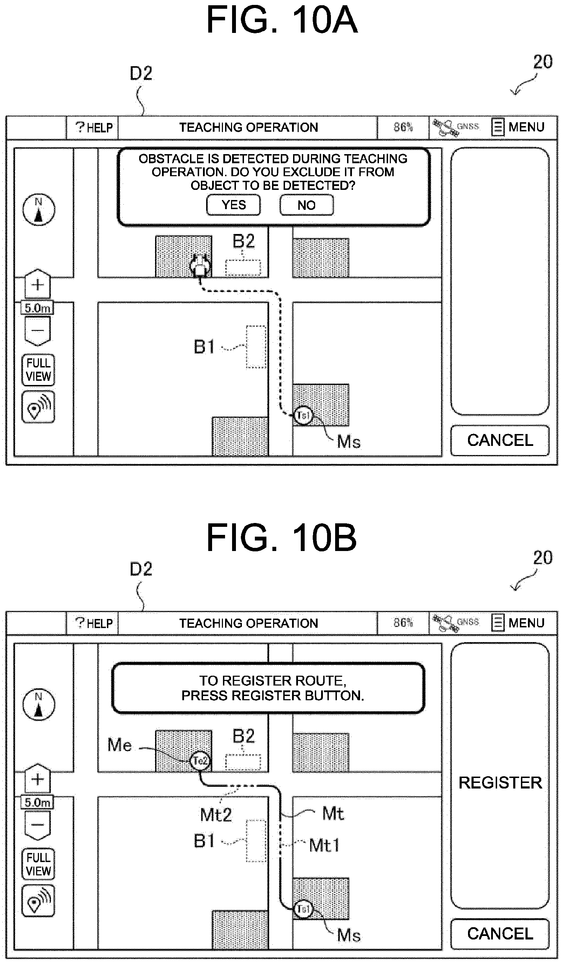

In contrast, when the work vehicle 10 detects the obstacles during the teaching travel, if the operator presses down the end button on the teaching operation screen D2 (see FIG. 8B), the reception process unit 212 notifies the operator of whether or not the obstacles should be excluded from a target to be avoided during travel of the work vehicle 10 (avoidance travel target) on the teaching operation screen D2 shown in FIG. 10A. For example, as shown in FIG. 10A, the reception process unit 212 causes the screen to display information on the map (dotted line frame), which indicate the location (range) of the trees B1 detected as the obstacle, and information on the map (dotted line frame), which indicate the location (range) of the trees B2 detected as the obstacle, as well as inquires of the operator about whether or not the trees B1 and the trees B2 should be excluded from the avoidance travel targets (objects to be detected during autonomous travel).

If the operator selects the answer ("YES") to exclude the trees B1 and B2 from the avoidance travel targets, the reception process unit 212 accepts the operation, and the generation process unit 214 excludes the trees B1 and B2 from the avoidance travel targets (sets them as non-avoidance travel targets) to generate the inter-field route R12. The generation process unit 214 causes the teaching operation screen D2 to display the route image Mt of the generated inter-field route R12 on the map as shown in FIG. 10B. In addition, the generation process unit 214 causes the screen to display identifiably (dotted line in FIG. 10B) a section Mt1 corresponding to the trees B1 which are excluded from the avoidance travel targets and a section Mt2 corresponding to the trees B2 which are excluded from the avoidance travel targets, of the inter-field route R12. The section Mt1 corresponds to the range where the work vehicle 10 (obstacle sensor 18) detects the trees B1 as the obstacles, and the section Mt2 corresponds to the range where the work vehicle 10 (obstacle sensor 18) detects the trees B2 as the obstacles.

The generation process unit 214 notifies the operator of whether or not to register the generated inter-field route R12 on the teaching operation screen D2 illustrated in FIG. 10B. When the operator confirms the inter-field route R12 on the teaching operation screen D2 and presses down the registration button, the generation process unit 214 acquires a command to register the inter-field route R12. When the generation process unit 214 acquires the registration command, it registers the inter-field route R12 in association with the field F1 and the field F2.

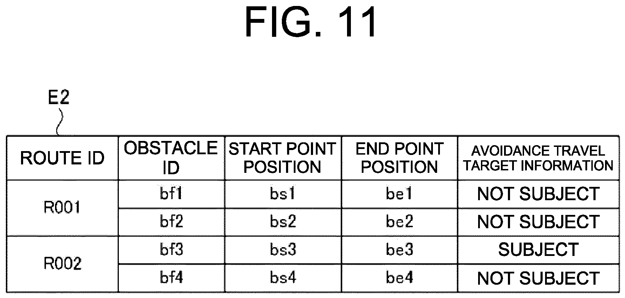

Specifically, the generation process unit 214 registers information associated with the obstacles (obstacle information) in the obstacle information table E2. FIG. 11 shows an example of the obstacle information table E2. The obstacle information table E2 includes the route ID, obstacle ID, start point position, end point position, and information about the avoidance travel targets. The route ID is identification information of the inter-field route. A route ID "R001" may indicate the inter-field route R12. The obstacle ID is identification information of the obstacle. The obstacle ID "bfl" corresponds to the trees B1, and the obstacle ID "bf2" corresponds to the trees B2. The start point position is information indicating a position of one end portion (start point) of the obstacle detected by the detection process device 17, and the end point position is information indicating a position of the other end portion (end point) of the obstacle detected by the detection process device 17. The start point position "bs1" is a position of one end portion of the trees B1, and the end point position "be1" is a position of the other end portion of the trees B1. The start point position "bs2" is a position of one end portion of the trees B2, and the end point position "be2" is a position of the other end portion of the trees B2. The start point position may be the position of the work vehicle 10 at the time when the obstacle detection is initiated, and the end point position may be the position of the work vehicle 10 at the time when the obstacle detection is finished.

The above-mentioned avoidance travel targets information is information to indicate whether the obstacles are targets to be avoided during travel of the work vehicle 10 (avoidance travel targets) or the obstacles are targets not to be avoided during travel of the work vehicle 10 (non-avoidance travel targets). The avoidance travel target information is registered, for example, in response to selection operation by the operator (see FIG. 10A). In the example shown in FIG. 10A, as the operator selects "YES", information indicating that the trees B1 and the trees B2 are non-avoidance travel targets ("not target") are respectively associated with obstacle information "bfl" corresponding to the trees B1 and obstacle information "bf2" corresponding to the trees B2, and registered. When the obstacle is registered as the avoidance travel target, the work vehicle 10 performs avoidance travel (deceleration, stopping, etc.) if it detects the obstacle during travel autonomously along the inter-field route. In contrast, when the obstacle is registered as the non-avoidance travel target, the work vehicle 10 does not perform the avoidance travel if it detects the obstacle during travel autonomously along the inter-field route, but it travels at a preset vehicle speed (normal traveling).

When the obstacle is detected during the teaching travel, the generation process unit 214 registers the obstacle information in association with the inter-field route in the obstacle information table E2.

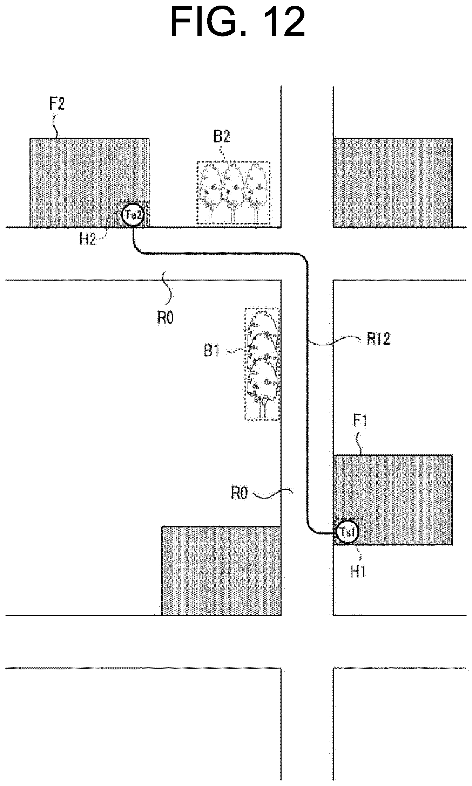

As mentioned above, when no obstacles are detected during the teaching travel, the generation process unit 214 generates the inter-field route and registers the generated inter-field routes in the inter-field route information table E1 (see FIG. 9). Also, in the case where the obstacle is non-avoidance travel target, the generation process unit 214 stores the position information of the obstacle in association with the inter-field route. Specifically, when no obstacles are detected during the teaching travel, the generation process unit 214 generates the inter-field route and registers the generated inter-field routes in the inter-field route information table E1, and also registers obstacle information in the obstacle information table E2 (see FIG. 11). FIG. 12 shows the inter-field route R12 from the route start position Ts1 at the entrance/exit H1 of the field F1 to the route end position Te2 at the entrance/exit H2 of the field F2, and the trees B1 and B2 that are registered as non-avoidance travel targets.

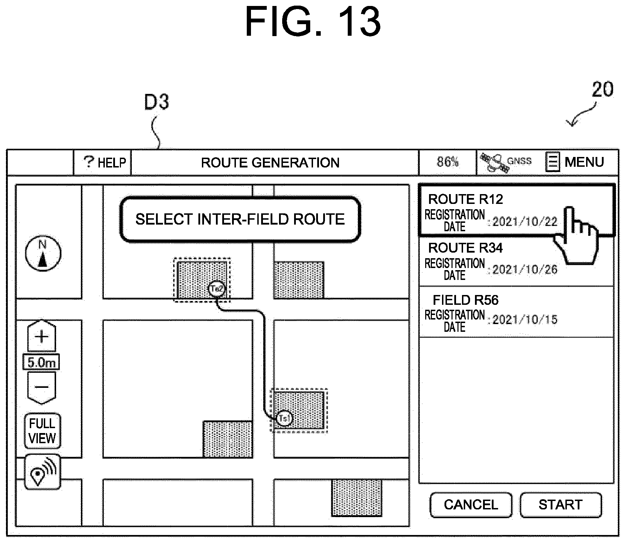

When the operator causes the work vehicle 10 to initiate the autonomous travel, he/she selects multiple fields and also selects the inter-field route for traveling autonomously between fields out of the inter-field routes registered in the inter-field route information table E1. For example, in the route generation screen D3 shown in FIG. 13, if the operator selects the fields F1 and F2, the operation control unit 21 causes the screen to display a list of the inter-field routes registered in the inter-field route information table E1 and accepts the selection operation of inter-field route by the operator. Although omitted in the drawings, the operation control unit 21 accepts on the route generation screen D3 the operation to select the target route R1 for the field F1 (see FIG. 4A) and the target route R2 for the field F2 (see FIG. 4B).

The operation control unit 21 determines whether the inter-field route connecting the field F1 and the field F2 is registered in the inter-field route information table E1, and causes the route generation screen D3 to display the inter-field route when the inter-field route is registered in the inter-field route information table E1.

When the operator performs the selection operation to select the field F1 and the field F2, the selection operation to select the target route R1 for the field F1 and the target route R2 for the field F2, and the selection operation to select the inter-field route R12 on which the work vehicle 10 moves between the field F1 and the field F2, and then presses down the start button (see FIG. 13), the output process unit 215 outputs route data of the target routes and the inter-field route to the work vehicle 10. Note that when the operator selects the field F1 and the field F2, the operation control unit 21 may extract the inter-field route R12 that connects the field F1 and the field F2 from the inter-field routes registered in the inter-field route information table E1 and set the inter-field route R12. In this case, the selection operation of the inter-field route by the operator can be omitted.

When the inter-field route is set and obstacle information is registered for the inter-field route in the obstacle information table E2, the output process unit 215 outputs route data including the target route, the inter-field route, and the obstacle information to the work vehicle 10.

Here, the output process unit 215 outputs to the work vehicle 10 the route data including the target route R1 which is a work route in the field F1 (see FIG. 4A), the target route R2 which is a work route in the field F2 (see FIG. 4B), the inter-field route R12 which is an inter-field route that connects the field F1 and the field F2 (see FIG. 12), and obstacle information corresponding to the trees B1 and the trees B2 (see FIG. 11), which are associated with the inter-field route R12 ("R001").

Upon the route data of the target route generated from the operation terminal 20 is transmitted to the work vehicle 10, the work vehicle 10 stores the route data in the storage unit 12. The work vehicle 10 performs an autonomous travel process based on the route data while detecting the current position of the work vehicle 10 with the positioning antenna 164. The current position of the work vehicle 10 usually coincides with the position of the positioning antenna 164.

The work vehicle 10 is configured to be able to autonomously travel in the field F1 in a case where the current position of the work vehicle 10 coincides with the travel start position S1 in the field F1 (see FIG. 4A), and to autonomously travel in the field F2 in a case where the current position of the work vehicle 10 does not coincided with the travel start position S2 in the field F2 (see FIG. 4B). The work vehicle 10 is also configured to autonomously travel on the inter-field route R12 in a case where the current position of the work vehicle 10 coincides with the route start position Ts1 at the entrance/exit H1 of the field F1 (see FIG. 12).

For example, in the case where the current position of the work vehicle 10 coincides with the travel start position S1 in the field F1, and when the operator presses down the start button (not shown) to issue a travel start command, the travel processor 111 of the work vehicle 10 causes the work vehicle 10 to initiate autonomous travel on the target route R1.

The travel processor 111 causes the work vehicle 10 to travel autonomously from the travel start position S1 to the travel end position G1 in the field F1 along the target route R1 (see FIG. 4A). When the work vehicle 10 reaches the travel end position G1, the operator moves the work vehicle 10 from the travel end position G1 to the route start position Ts1. The travel processor 111 may cause the work vehicle 10 to autonomously travel from the travel end position G1 to the route start position Ts1.

If the current position of the work vehicle 10 coincided with the route start position Ts1, the travel processor 111 causes the work vehicle 10 autonomously travel from the route start position Ts1 to the route end position Te2 in the field F2 along the inter-field route R12 (see FIG. 12). The travel processor 111 temporarily stops the work vehicle 10 to check for safety when the work vehicle 10 goes out of the field F1 onto the road R0.

The travel processor 111 causes the work vehicle 10 to autonomously travel based on the position information and speed information associated with the inter-field route R12 (see FIG. 9). For example, the travel processor 111 sets the traveling speed corresponding to the speed information (e.g., traveling speed during teaching travel) as an upper limit speed and causes the work vehicle 10 to autonomously travel while controlling the traveling speed thereof.

When the obstacle is detected while the work vehicle 10 is traveling autonomously on the road R0 along the inter-field route R12, the travel processor 111 determines whether or not the obstacle is non-avoidance travel target. Specifically, the travel processor 111 determines that the obstacle is non-avoidance travel target if the position of the obstacle detected by the obstacle sensor 18 falls within the range from the start point position to the end point position registered in the obstacle information table E2 (see FIG. 11), as well as if the obstacle is registered in the obstacle information table E2 in association with information that the obstacle is non-avoidance travel target.

If the obstacle detected by the obstacle sensor 18 is not within the range from the start point to the end point registered in the obstacle information table E2, or if the obstacle is registered in the obstacle information table E2 with information on the object to be avoided, the travel processor 111 The obstacle is judged to be an object to be avoided in the obstacle information table E2.

If the obstacle is detected while the work vehicle 10 is traveling autonomously along the road R0 along the inter-field route R12 and the travel processor 111 determines that the obstacle is non-avoidance travel target, the travel processor 111 does not execute any avoidance travel process such as deceleration or stopping, but causes the work vehicle 10 to travel autonomously (normal traveling) based on the speed information associated with the inter-field route R12 (see FIG. 9). That is, the travel processor 111 continues to travel autonomously assuming that the obstacles set as non-avoidance travel targets are not the obstacles to be avoided.

In contrast, if the obstacle is detected while the work vehicle 10 is traveling autonomously on the road R0 along the inter-field route R12 and the travel processor 111 determines that the obstacle is avoidance travel target, the travel processor 111 executes avoidance traveling process such as deceleration and stopping.

When the work vehicle 10 travels autonomously along the inter-field route R12, the travel processor 111 temporarily stops the work vehicle 10 to check for safety when the work vehicle 10 enters into the field F2 from the road R0. When the work vehicle 10 reaches the route end position Te2, the operator moves the work vehicle 10 from the route end position Te2 to the travel start position S2 of the field F2. The travel processor 111 may cause the work vehicle 10 travel autonomously from the route end position Te2 to the travel start position S2.

When the current position of the work vehicle 10 coincides with the travel start position S2, the travel processor 111 causes the work vehicle 10 to travel autonomously from the travel start position S2 to the travel end position G2 along the target route R2 (see FIG. 4B). When the work vehicle 10 reaches the travel end position G2, the travel processor 111 causes the work vehicle 10 to terminate autonomous travel. Thus, the travel processor 111 causes the work vehicle 10 to autonomously travel within the field F1, then autonomously travel along the inter-field route R12 from the field F1 to the field F2, and then autonomously travel within the field F2.

While the work vehicle 10 is traveling autonomously, the operator can grasp on the operation terminal 20 the traveling state in the field F1, the traveling state on the road R0 connecting the field F1 and the field F2, the traveling state in the field F2, the detection status of obstacles, etc.

Note that the operation terminal 20 may be accessible to a web site of agricultural support services (agricultural support site) provided by a server (not illustrated) via the communication network N1. In this case, a browser program is executed by the operation control unit 21, so that the operation terminal 20 can function as an operation terminal for the server. The server includes the above-mentioned each process units, which perform each process.

### Autonomous Travel Process

An example of the autonomous travel process performed by the autonomous travel system 1 is described below with reference to FIGS. 14 to 16. The autonomous travel process includes a setting process (see FIG. 14), a teaching process (see FIG. 15), and a travel control process (see FIG. 16), which are described below.

The present disclosure can be understood as a disclosure of an autonomous travel method that executes one or more steps included in the aforementioned autonomous travel process. One or more steps included in the autonomous travel process described herein may be omitted as appropriate. Note that each step in the above mentioned autonomous travel process may be executed in a different order as long as the same functional effect is obtained. Furthermore, although a case where the vehicle control device 11 and the operation control unit 21 execute each step in the above mentioned autonomous travel process is to be described here as an example, an autonomous travel method in which one or more processors execute each step in the autonomous travel process in a distributed manner is also considered as another embodiment.

### Setting Process

FIG. 14 shows an example of setting process of the route data, which is executed in the operation control unit 21.

In step S1, the operation control unit 21 of the operation terminal 20 determines whether or not the selection operation of the field by the operator is accepted. If the operation control unit 21 accepts the selection operation of the field (S1: Yes), it moves the process to step S2. The operation control unit 21 waits until the selection operation of the field is accepted (S1: No). Here, the operator selects the field F1.

In step S2, the operation control unit 21 determines whether the selection operation of a work route by the operator is accepted. If the operation control unit 21 accepts the selection operation of the work route (S2: Yes), it moves the process to step S3. When the operation control unit 21 does not accept the selection operation of the work route (S2: No), the process returns to step S1. Here, the operator selects the target route R1 (see FIG. 4A) as a work route for the field F1.

In step S3, the operation control unit 21 determines whether the selection operation of the field is completed. For example, if the operator selects the field F1 and target route R1 and performs a completion operation (S3: Yes), the operation control unit 21 moves the process to step S4. If the selection operation of the field is not completed (S3: No), the operation control unit 21 moves the process to step S1.

Returning to step S1, the operation control unit 21 determines whether the selection operation of the field by the operator is accepted. Here, the operation control unit 21 accepts the selection operation of the field F2 from the operator. In subsequent step S2, the operation control unit 21 accepts from the operator the selection operation of the target route R2 (see FIG. 4B) as the work route corresponding to the field F2.

In step S4, the operation control unit 21 determines whether a plurality of fields are selected by the operator. If the operator selects the plurality of fields (S4: Yes), the operation control unit 21 moves the process to step S5. On the other hand, if the operator selects a single field (S4: No), the operation control unit 21 moves the process to step S7.

In step S5, the operation control unit 21 determines whether the inter-field route that connects the plurality of fields selected by the operator is being registered in the inter-field route information table E1 (see FIG. 9). If the inter-field route is being registered (S5: Yes), the operation control unit 21 moves the process to step S6. On the other hand, if the inter-field route is not registered (S5: No), the operation control unit 21 moves the process to step S51 (teaching process illustrated in FIG. 15). Moving to step S51, the operation control unit 21 executes generation process of the inter-field route (S51) and sets the generated inter-field route as the inter-field route that connects the plurality of fields that are selected by the operator (S52). Here, the operation control unit 21 sets the inter-field route R12 generated by the teaching processing as the inter-field route that connects the field F1 and the field F2 (S52). Thereafter, the operation control unit 21 moves the process to step S7.

In step S6, the operation control unit 21 sets the inter-field route that is selected by the operator or the inter-field route that is automatically extracted, out of the inter-field routes registered in the inter-field route information table E1 (see FIG. 9), as the inter-field route that connects the plurality of fields selected by the operator. Thereafter, the operation control unit 21 moves the process to step S7.

In step S7, the operation control unit 21 determines whether travel start operation command issued by the operator is accepted. If the operation control unit 21 accepts the travel start operation command issued by the operator (S7: Yes), the operation control unit 21 moves the process to step S8. The operation control unit 21 waits until the travel start operation command issued by the operator is accepted (S7: No).

In step S8, the operation control unit 21 outputs the route data to the work vehicle 10. The route data includes the target route, which is the work route in the field. When there are a plurality of fields, the route data further includes the inter-field routes. If obstacle information associated with the obstacles detected on the inter-field route is registered in the obstacle information table E2 (see FIG. 11), the route data further includes the obstacle information. For example, the operation control unit 21 outputs to the work vehicle 10 the route data including the target route R1 which is a work route in the field F1 (see FIG. 4A), the target route R2 which is a work route in the field F2 (see FIG. 4B), the inter-field route R12 which is an inter-field route that connects the field F1 and the field F2 (see FIG. 12), and obstacle information of the trees B1 and the trees B2 (see FIG. 11), which are associated with the inter-field route R12.

### Teaching Process

FIG. 15 shows an example of the teaching process for the inter-field routes (step S51 in FIG. 14) executed by the operation control unit 21. Here, it is assumed that the operator selects the field F1 and the field F2 as fields corresponding to the inter-field route.

In the teaching process, first, in step S11, the operation control unit 21 determines whether the teaching operation start command issued by the operator is acquired. If the operation control unit 21 acquires a teaching operation start command issued by the operator (S11: Yes), it moves the process to step S12. The operation control unit 21 waits until the operation control unit 21 acquires the teaching operation start command issued by the operator (S11: No).

In step S12, the operation control unit 21 determines whether the current position of the work vehicle 10 coincides with the position of the entrance/exit of the field. Here, the operation control unit 21 determines whether the work vehicle 10 is located at the entrance/exit H1 of the field F1 (see FIG. 4A). If the current position of the work vehicle 10 coincides with the position of the entrance/exit of the field (S12: Yes), the operation control unit 21 moves the process to step S13. The operation control unit 21 waits until the current position of the work vehicle 10 coincides with the position of the entrance or exit of the field (S12: No).

In step S13, the operation control unit 21 accepts the teaching travel start operation. For example, if the operator presses down the start button on the teaching operation screen D2 illustrated in FIG. 8A, the operation control unit 21 accepts the teaching travel start operation.

Next, in step S14, the operation control unit 21 sets the start position of the inter-field route (route start position). Here, upon the operation control unit 21 accepts the start operation, the operation control unit 21 sets the current position of the work vehicle 10 which is located at the entrance/exit H1 of the field F1 as the route start position Ts1 (see FIG. 8A). This allows the operator to operate the teaching travel. For example, the operator brings in the operation terminal 20 to the work vehicle 10 and manually drives the work vehicle 10 on the road R0 from the field F1 to the field F2 (see FIG. 3) while checking the guide route Mr (see FIG. 8A) displayed on the operation terminal 20.

Next, in step S15, the operation control unit 21 acquires travel information of the work vehicle 10 (position information, travel speed information, road information, or the like) while the operator causes the work vehicle 10 to perform the teaching travel. The operation control unit 21 stores the acquired travel information in the storage unit 22.

Next, in step S16, the operation control unit 21 determines whether or not an obstacle is detected. If the obstacle sensor 18 detects the obstacle while the work vehicle 10 is performing the teaching travel, the operation control unit 21 acquires the position information of the obstacle from the detection process device 17. If the operation control unit 21 acquires the position information of the obstacle, it determines that the obstacle is detected (S16: Yes) and moves the process to step S17. If the operation control unit 21 does not acquire the position information of the obstacle, it determines that the obstacle is not detected (S16: No) and moves the process to step S18.

As another embodiment, in step S16, the operation control unit 21 may announce the operator that the obstacle is detected if the obstacle sensor 18 detects the obstacle while the work vehicle 10 is performing the teaching travel. For example, the operation control unit 21 may cause the teaching operation screen shown in FIG. 8B to display information such as a message indicating that the obstacle is detected, the position of the work vehicle 10 at the time when the obstacle is detected, and the position of the obstacle.

In step S17, the operation control unit 21 registers the position information of the obstacle in the storage unit 22. Specifically, the operation control unit 21 registers the obstacle information in the obstacle information table E2 (see FIG. 11). For example, the operation control unit 21 registers the position information of the trees B1 (start point position and end point position) in the obstacle information table E2 in association with the obstacle ID of the tree B1. The operation control unit 21 also registers the position information of the trees B2 (start point position and end point position) in the obstacle information table E2 in association with the obstacle ID of the trees B2.

Next, in step S18, the operation control unit 21 determines whether or not it accepts ending operation of the teaching travel from the operator. If the operation control unit 21 accepts the ending operation of the teaching travel from the operator (S18: Yes), it moves the process to step S19. The operation control unit 21 continues the process of acquiring the travel information and the process of registering the obstacle information according to the teaching travel by the operator (S18: No) until the operation control unit 21 accepts the ending operation of the teaching travel from the operator. For example, upon the work vehicle 10 reaches the entrance/exit H2 of the field F2, the operator performs the ending operation of the teaching travel (see FIG. 8B).

In step S19, the operation control unit 21 sets the end position of the inter-field route (route end position). Here, if the operation control unit 21 accepts the ending operation, it sets the current position of the work vehicle 10 which is located at the entrance/exit H2 of the field F2 as the route end position Te2.

Next, in step S20, the operation control unit 21 determines whether or not the obstacle information corresponding to the inter-field route is registered in the obstacle information table E2. If the obstacle information corresponding to the inter-field route R12 is registered in the obstacle information table E2 (S20: Yes), the operation control unit 21 moves the process to step S21. On the other hand, if the obstacle information corresponding to the inter-field route R12 is not registered in the obstacle information table E2 (S20: Yes), the operation control unit 21 moves the process to step S23.

In step S21, the operation control unit 21 determines whether or not to register the obstacle included in the obstacle information as the avoidance travel target. For example, the operation control unit 21 inquires of the operator about whether or not to register the trees B1 and the trees B2 corresponding to the inter-field route R12 as the non-avoidance travel target. For example, as shown in FIG. 10A, the operation control unit 21 causes the screen to display information indicating the location (range) of the trees B1 (dotted frame) and information indicating the location (range) of the trees B2 (dotted frame) on the map, as well as inquires of the operator about whether or not to exclude the trees B1 and the trees B2 from the avoidance travel target. If the operator selects the answer ("YES") indicating that the trees B1 and the trees B2 should be excluded from the avoidance travel target, the operation control unit 21 determines that the trees B1 and the trees B2 are registered as the non-avoidance travel target (S21: Yes) and moves the process to step S22. If the operator selects the answer ("NO") indicating that the trees B1 and the trees B2 should not be excluded from the avoidance travel target, the operation control unit 21 determines that the trees B1 and the trees B2 are registered as the avoidance travel target (S21: Yes) and moves the process to step S211.

In step S22, the operation control unit 21 registers the obstacle in the obstacle information table E2 as the non-avoidance travel target. For example, the operation control unit 21 registers each of the obstacle ID "bfl" corresponding to the trees B1 and the obstacle ID "bf2" corresponding to the trees B2 in association with information indicating that trees B1 and tree B2 are non-avoidance travel target ("not subject") in the obstacle information table E2 (see FIG. 11). After the step S22, the operation control unit 21 moves the process to the step S23.

In this way, the operation control unit 21 inquires of the operator about whether or not to register the obstacle as the non-avoidance travel target, and if the operation control unit 21 obtains a command to resister the obstacle as the non-avoidance travel target from the operator, it stores the position information of the obstacle in association with the inter-field route.

On the other hand, in step S211, the operation control unit 21 registers the obstacle as the non-avoidance travel target in the obstacle information table E2. After the step S211, the operation control unit 21 moves the process to the step S23.

In step S23, the operation control unit 21 generates the inter-field route. Specifically, when no obstacles are detected during the teaching travel, the operation control unit 21 generates the inter-field route and registers the generated inter-field route in the inter-field route information table E1. (see FIG. 9). Furthermore, when the obstacles are detected during the teaching travel, the operation control unit 21 generates the inter-field route and registers the generated inter-field route in the inter-field route information table E1, and also registers obstacle information in the obstacle information table E2 (see FIG. 11).

For example, as shown in FIG. 12, the operation control unit 21 generates the inter-field route R12 which connects the route start position Ts1 at the entrance/exit H1 of field F1 and the route end position Te2 at the entrance/exit H2 of field F2 and passes through the road R0. The operation control unit 21 notifies the operator of whether or not to register the generated inter-field route R12 on the teaching operation screen D2 illustrated in FIGS. 8C and 10B. When the operator confirms the inter-field route R12 on the teaching operation screen D2 and presses down the registration button, the operation control unit 21 acquires the command to register the inter-field route R12, and registers the inter-field route R12 in association with the field F1 and the field F2.

The operation control unit 21 executes the teaching process as mentioned above and sets the inter-field route R12 generated in the teaching process as the inter-field route between the field F1 and the field F2 in Step S52 (see FIG. 14).

### Travel Control Process

FIG. 16 shows an example of a travel control process executed in the vehicle control device 11. Here, it is assumed that the work vehicle 10 autonomously travels through the field F1, the inter-field route R12, and the field F2 (see FIG. 12) in this order.

First, in step S31, the vehicle control device 11 causes the work vehicle 10 to perform work with the work machine 14 in the field F1 while traveling autonomously following the target route R1 (see FIG. 4A).

Next, in step S32, the vehicle control device 11 determines whether or not the work vehicle 10 initiates the autonomous travel on the inter-field route R12. When the work vehicle 10 finishes its work in the field F1 and reaches the route start position Ts1, the vehicle control device 11 determines that the work vehicle 10 initiates the autonomous travel on the inter-field route R12. The vehicle control device 11 continues the work in the field F1 until the work vehicle 10 reaches the route start position Ts1 (S31: No). If the vehicle control device 11 determines that the work vehicle 10 is ready for the autonomous travel on the inter-field route R12 (S31: Yes), it moves the process to step S33.

In step S33, the vehicle control device 11 determines whether the obstacle sensor 18 detects the obstacle while the work vehicle 10 is autonomously traveling along the inter-field route R12. If the vehicle control device 11 determines that the obstacle sensor 18 detects the obstacle (S33: Yes), it moves the process to step S34. On the other hand, if the vehicle control device 11 determines that the obstacle sensor 18 does not detect the obstacle (S33: No), it moves the process to step S331.

In step S34, the vehicle control device 11 determines whether the detected obstacle is registered as the non-avoidance travel target. Specifically, the vehicle control device 11 determines that the obstacle is the non-avoidance travel target if the position of the obstacle detected by the obstacle sensor 18 falls within the range from the start point position to the end point position registered in the obstacle information table E2 (see FIG. 11), as well as if the obstacle is registered in the obstacle information table E2 in association with information that the obstacle is the non-avoidance travel target.

The vehicle control device 11 determines that the obstacle is not the non-avoidance travel target if the position of the obstacle detected by the obstacle sensor 18 does not fall within the range from the start point position to the end point position registered in the obstacle information table E2, or if the obstacle is registered in the obstacle information table E2 in association with information that the obstacle is the avoidance travel target.

If the vehicle control device 11 determines that the detected obstacle is the non-avoidance travel target (S34: Yes), it moves the process to step S331. On the other hand, if the vehicle control device 11 determines that the detected obstacle is not the non-avoidance travel target (S34: No), it moves the process to step S35.

In step S35, the vehicle control device 11 executes the avoidance travel process such as deceleration and stopping. On the other hand, in step S331, the vehicle control device 11 does not execute the avoidance travel process, but executes a normal travel process based on the speed information associated with the inter-field route R12 (see FIG. 9).

In this way, when the obstacle is detected while the work vehicle 10 is autonomously traveling along the inter-field route, if the position of the obstacle is included in the position information of the obstacle associated with the inter-field route (non-avoidance travel target) (S34: Yes), the vehicle control device 11 does not cause the work vehicle 10 to perform the avoidance travel (S331). After steps S35 and S331, the vehicle control device 11 moves the process to the step S36. In step S34, if the position of the detected obstacle falls within the range where a margin is added to the position information of the obstacle associated with the inter-field route, the vehicle control device 11 may determine that the obstacle is the non-avoidance travel target.

At step S36, the vehicle control device 11 determines whether or not the work vehicle 10 finishes the autonomous travel on the inter-field route R12. If the work vehicle 10 reaches the route end position Te2 of the inter-field route R12, the vehicle control device 11 determines that the autonomous travel of the inter-field route R12 is finished. The vehicle control device 11 continues to cause the work vehicle 10 to perform the autonomous travel on the inter-field route R12 until the work vehicle 10 reaches the route end position Te2 (S36: No). If the vehicle control device 11 determines that the work vehicle 10 finishes the autonomous travel on the inter-field route R12 (S36: Yes), it moves the process to step S37.

In step S37, the vehicle control device 11 causes the work vehicle 10 to perform work with the work machine 14 in the field F2 while autonomously traveling along the target route R2 (see FIG. 4B). If the work vehicle 10 finishes its work in the field F2, the vehicle control device 11 ends the travel control process.

As mentioned above, the operation control unit 21 and the vehicle control device 11 execute the autonomous travel process.

As described above, the autonomous travel system 1 according to the present embodiment is configured to detect the obstacle (an example of an object to be detected) while the work vehicle 10 is traveling on the road R0 (an example of a connection road of the present disclosure) connecting the field F1 (an example of a first area of the present disclosure) and the field F2 (an example of a second area of the present disclosure), and to cause the work vehicle 10 to perform the avoidance travel when the obstacle is registered as the avoidance travel target which is an object to be subject to the avoidance travel by the work vehicle 10, and to cause the work vehicle 10 not to perform the avoidance travel when the obstacle is registered as the non-avoidance travel target which is not an object to be subject to the avoidance travel by the work vehicle 10.

According to the above mentioned configuration, even if, for example, the obstacle is detected while the work vehicle 10 is autonomously traveling along the inter-field route, if the obstacle is registered as non-avoidance travel target (set as a non-avoidance travel target), the work vehicle 10 can perform normal travel process without performing avoidance travel process such as decelerating or stopping. This prevents unnecessary avoidance travel process from being executed when the obstacle is detected, thereby improving the traveling efficiency of the work vehicle 10 traveling on the inter-field route.

### Other Embodiments

The present disclosure is not limited to the embodiment described above, but may include the following embodiments.

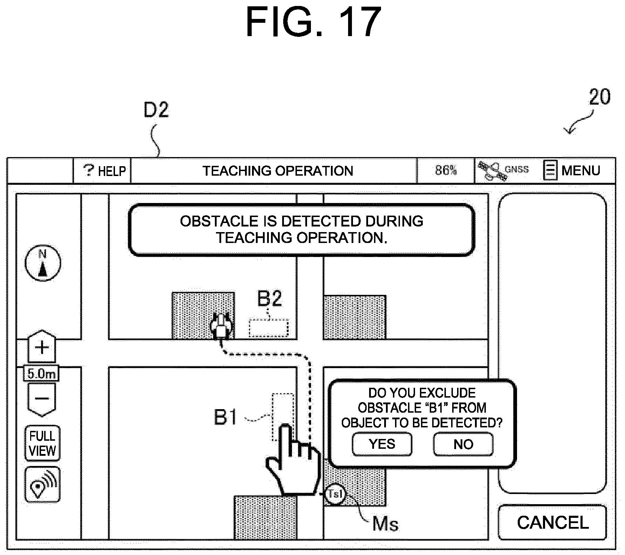

For example, when multiple obstacles are detected, the operation control unit 21 inquires of the operator about whether or not to register each of the obstacles as the non-avoidance travel target, it may store the position information of the obstacle which is selected as the non-avoidance travel target in association with the inter-field route. For example, if the obstacle sensor 18 detects the obstacles B1 and B2 on the road R0, the operation control unit 21 displays the obstacles B1 and B2 selectably on the teaching operation screen D2 shown in FIG. 17. The operator can select (touch operation) the icon images of obstacles B1 and B2 on the teaching operation screen D2. Upon the operator selects the obstacle B1, the operation control unit 21 inquires of the operator about whether or not to resister the obstacle B1 as the non-avoidance travel target. If the operator selects the answer ("YES") indicating that obstacle B1 should be excluded from the avoidance travel target, the operation control unit 21 registers the obstacle B1 as the non-avoidance travel target. Subsequently, if the operator selects the obstacle B2, the operation control unit 21 inquires of the operator about whether or not to register the obstacle B2 as the non-avoidance travel target. If the operator selects the answer ("NO") indicating that obstacle B2 should not be excluded from the avoidance travel target, the operation control unit 21 registers the obstacle B1 as the avoidance travel target. In this way, the operation control unit 21 may be able to register the detected obstacles as the avoidance travel target or the non-avoidance travel target for each obstacle.

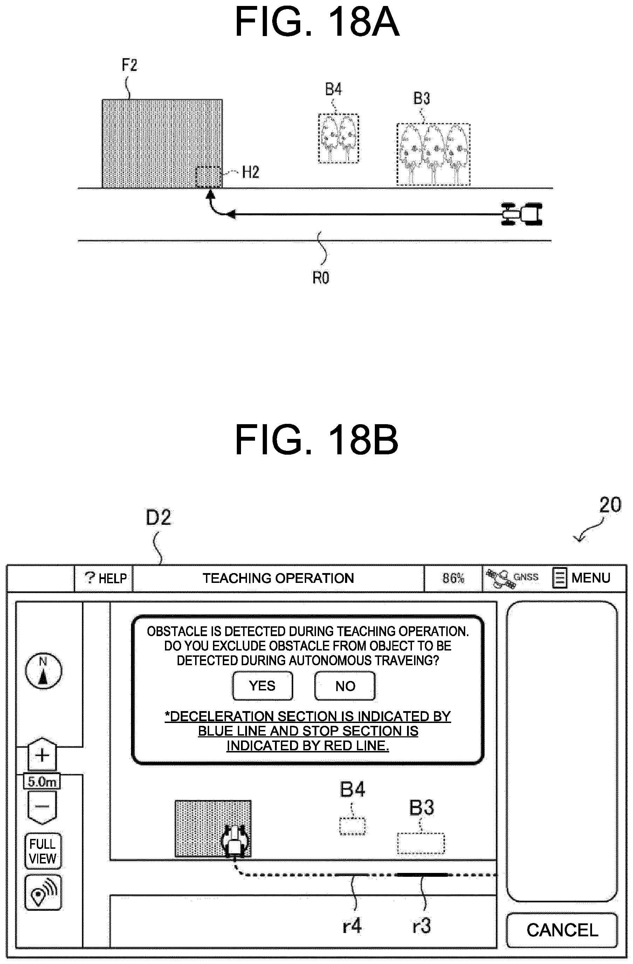

As another embodiment of the present disclosure, when the obstacle is detected while traveling on the road R0 based on the teaching operation by the operator, the operation control unit 21 may cause the operation terminal 20 to display information indicating that the obstacle is detected in a display mode according to the distance from the work vehicle 10 to the obstacle. For example, as shown in FIG. 18A, in the case where the distance from the work vehicle 10 to the obstacle B3 when the work vehicle 10 detects the obstacle B3 is different from the distance from the work vehicle 10 to the obstacle B4 when the work vehicle 10 detects the obstacle B4, the operation control unit 21 causes the operation terminal 20 to display the inter-field route in a different display mode. For example, as shown in FIG. 18B, in the case where the obstacle B3 is included in a stop area K11 (see FIG. 5), the operation control unit 21 cause the screen to display the partial route r3 of the section where obstacle B3 is detected with a solid red line, and in the case where the obstacle B4 is included in a deceleration area K12 (see FIG. 5), the operation control unit 21 causes the screen to display the partial route r4 of the section where the obstacle B4 is detected with a solid blue line. The operator may also be able to set the display mode to any other mode. In this case, the operation control unit 21 may cause the screen to display the partial routes r3 and r4 in a display mode according to the setting content set by the operator.

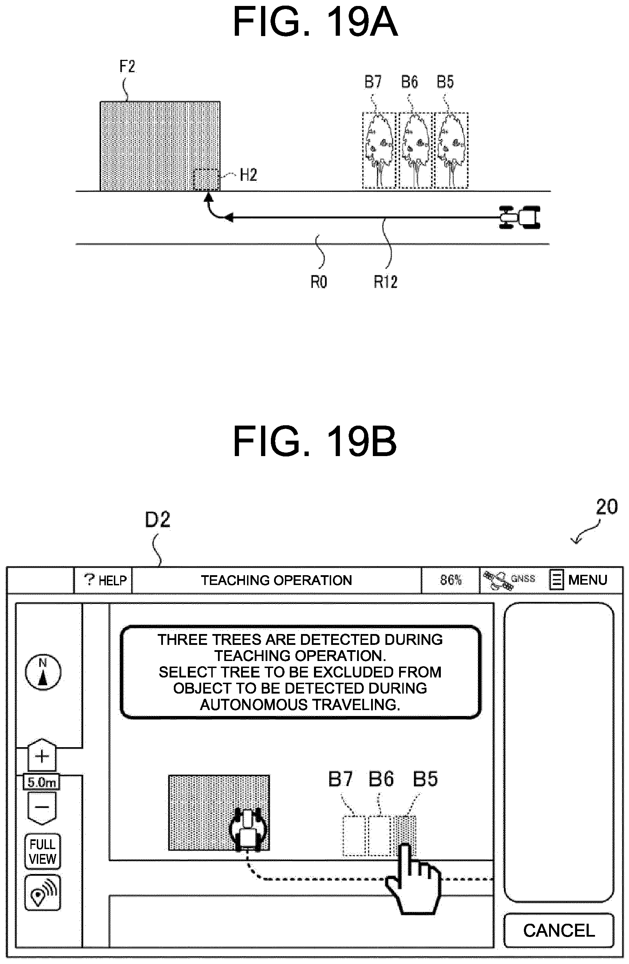

As another embodiment of the disclosure, the operation control unit 21 may store information about the type of obstacle in association with the position information of the obstacle when the work vehicle 10 detects the obstacle during travel on the road R0 based on a teaching operation by the operator. For example, when the work vehicle 10 is equipped with a camera, the detection process device 17 acquires image data captured by the camera to recognize the type of obstacle. For example, the detection process device 17 analyzes the image data to recognize the trees, vehicles, materials, utility poles, pylons, people, etc. For example, as shown in FIG. 19A, the detection process device 17 recognizes three trees B5, B6, and B7.

Upon the operation control unit 21 acquires the recognition result from the detection process device 17, it causes the teaching operation screen D2 shown in FIG. 19B to display the trees B5, B6, and B7 selectably. The operation control unit 21 may cause the teaching operation screen D2 to display the captured images of the trees B5, B6, and B7. The operator can select the trees to be registered as non-avoidance travel target on the teaching operation screen D2. The operation control unit 21 registers the trees selected by the operator as the non-avoidance travel target.

As another embodiment of the present disclosure, the operation control unit 21 may automatically register the obstacle as the non-avoidance travel target based on the recognition result of the obstacle type by the detection process device 17. For example, since the tree detected as the obstacle exists at the current location for a long time and is likely to be detected as the obstacle many times, the operation control unit 21 automatically registers such the tree as the non-avoidance travel target. In contrast, since the material detected as the obstacle may move within a short time period from its own current position, the operation control unit 21 does not automatically register the material as the non-avoidance travel target but inquires of the operator. For example, the operator registers the material as either the non-avoidance travel target or the avoidance travel target according to the state of the material. In this way, the operation control unit 21 may automatically register the obstacle as the non-avoidance travel target depending on the type of the obstacle.

As another embodiment of the present disclosure, the autonomous travel system 1 may be configured not to perform avoidance travel process when the work vehicle 10 detects the obstacle during autonomous traveling and determines that the obstacle is the non-avoidance travel target. According to this configuration, when the work vehicle 10 detects the obstacle, it can autonomously perform avoidance travel or omit avoidance travel depending on the type of obstacle. This allows driving efficiency to be improved and eliminates registration operation of the non-avoidance travel target by the operator in advance.

As another embodiment of the present disclosure, if the detection process device 17 detects the obstacle which is not associated with the inter-field route during autonomous traveling along the inter-field route by the work vehicle 10, the operation control unit 21 may inquire of the operator about whether or not to newly register the obstacle as the non-avoidance travel target. When the operation control unit 21 obtains a command issued from the operator to register the obstacle as the non-avoidance travel target, it stores the position information of the obstacle in association with the inter-field route.

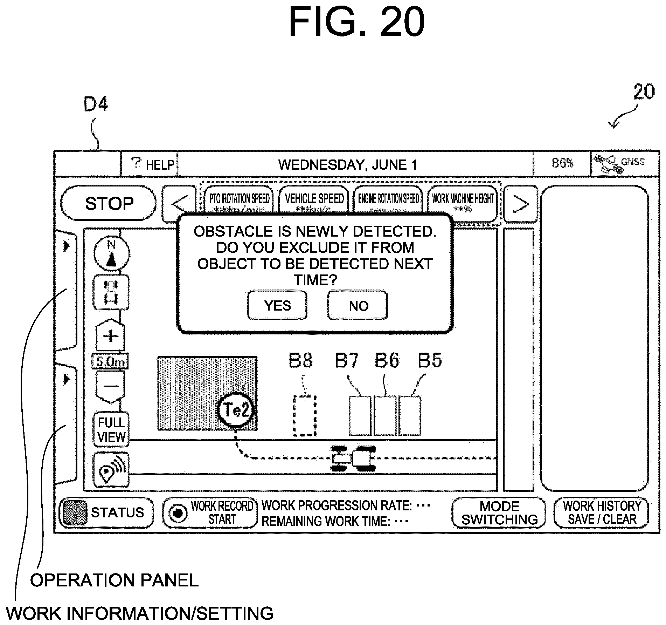

For example, during autonomous traveling along the inter-field route R12 shown in FIG. 19A by the work vehicle 10, when the detection process device 17 newly detects an obstacle B8 which is different from the obstacles (trees B5, B6, B7) registered in the obstacle information table E2, the operation control unit 21 inquires of the operator about whether to additionally resister the obstacle B8 as the non-avoidance travel target on the travel screen D4 shown in FIG. 20. If the detection process device 17 obtains a command issued by the operator to register the obstacle B8 as the non-avoidance travel, it resisters the obstacle B8 as the non-avoidance travel target. This allows the work vehicle 10 to perform normal travel process without performing avoidance travel process even if the work vehicle 10 detects the obstacle B8 during travel on the inter-field route R12 next time. If the operator knows in advance an obstacle to be newly disposed, the operator may perform registration operation of the obstacle as the non-avoidance travel target in advance.

As another embodiment of the present disclosure, if the detection process device 17 does not detect the obstacle which is associated with the inter-field route during autonomous traveling along the inter-field route by the work vehicle 10, the operation control unit 21 may inquire of the operator whether or not to exclude the obstacle from the non-avoidance travel target. When the operation control unit 21 obtains a command issued by the operator to exclude the obstacle from the non-avoidance travel target, it deletes the position information of the obstacle which is associated with the inter-field route.

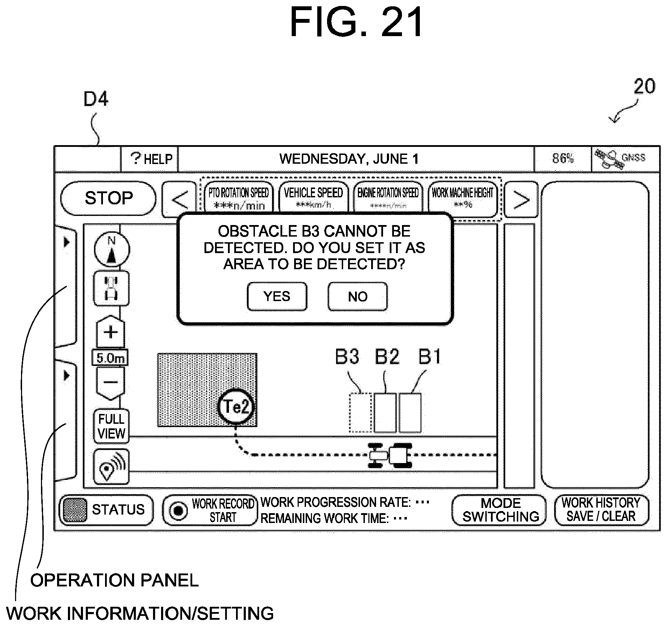

For example, if the detection process device 17 does not detect the trees B3 registered in the obstacle information table E2 during autonomous traveling along the inter-field route R12 shown in FIG. 19A by the work vehicle 10, the trees B3 may no longer exists due to cutting down or the like. In such a case, if the work vehicle 10 detects a new obstacle in the area where the trees B3 existed, it is necessary for the work vehicle 10 to perform avoidance travel process. Therefore, on the travel screen D4 shown in FIG. 21, the operation control unit 21 inquires of the operator whether or not to exclude the trees B3, which is registered as the non-avoidance travel target, from the non-avoidance travel target (set as an area to be detected). If the operation control unit 21 obtains a command issued by the operator to exclude the trees B3 from the non-avoidance travel target, it deletes the obstacle information corresponding to the trees B3 from the obstacle information table E2. For example, if the detection process device 17 detects afterwards the new obstacle in the area where the trees B3 existed during autonomous traveling along the inter-field route R12 by the work vehicle 10, this allows the work vehicle 10 to perform avoidance travel process properly.

As another embodiment of the present disclosure, if the detection process device 17 detects a second obstacle that is different from a first obstacle which is associated with the inter-field route during autonomous traveling along the inter-field route by the work vehicle 10, the operation control unit 21 may inquire of the operator whether or not to register the second obstacle as the non-avoidance travel target. When the operation control unit 21 obtains a command issued by the operator to register the second obstacle as the non-avoidance travel target, it deletes the location information of the first obstacle which is associated with the inter-field route and stores the location information of the second obstacle in association with the inter-field route.

For example, during autonomous traveling along the inter-field route R12 shown in FIG. 19A by the work vehicle 10, when the detection process device 17 detects the material not the trees B3 which are registered as the non-avoidance travel target in the obstacle information table E2, the operation control unit 21 inquires of the operator whether to resister the material as the non-avoidance travel target. If the detection process device 17 obtains a command issued by the operator to register the material as the non-avoidance travel, it deletes the obstacle information corresponding to the trees B3 from the obstacle information table E2 and resisters the material as the non-avoidance travel target therein. This allows the area corresponding to a current obstacle to be set as an area of the non-avoidance travel target.

As another embodiment of the present disclosure, if the detection process device 17 detects at the announcement area K13 (see FIG. 5) the obstacle which is registered by the obstacle sensor 18 as non-avoidance travel target during autonomous traveling along the inter-field route by the work vehicle 10, the operation control unit 21 may stop announcing an alarm externally.

As another embodiment of the present disclosure, for example, during autonomous traveling along the inter-field route R12 shown in FIG. 19A by the work vehicle 10, the vehicle control device 11 may stop the work vehicle 10 when the obstacle sensor 18 detects the obstacle B5, and the vehicle control device 11 may cause the work vehicle 10 to resume autonomous travel when the operator confirms safety and issues a command of travel resume.

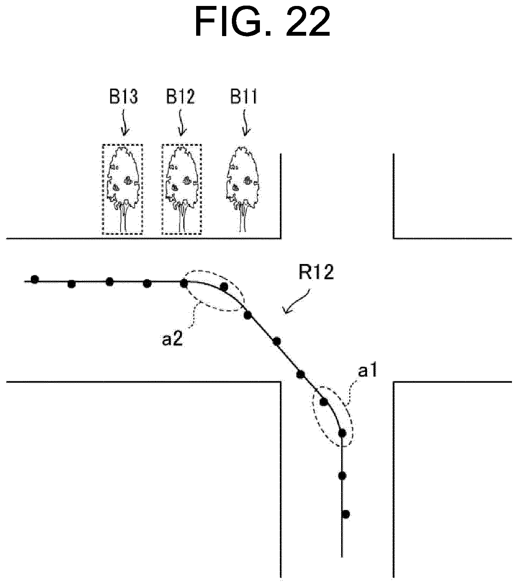

As another embodiment of the present disclosure, the operation control unit 21 may inquire of the operator about the registered contents regarding the avoidance travel target when the inter-field route R12 is changed after the inter-field route R12 is generated. FIG. 22 shows the inter-field route R12, wherein the operation control unit 21 acquires the position information of the work vehicle 10 at a predetermined cycle (sampling interval) while the work vehicle 10 is traveling on the road R0 following the teaching operation by the operator (teaching traveling), and after the teaching traveling is completed, the operation control unit 21 generates the inter-field route R12 based on the position information of the work vehicle 10.

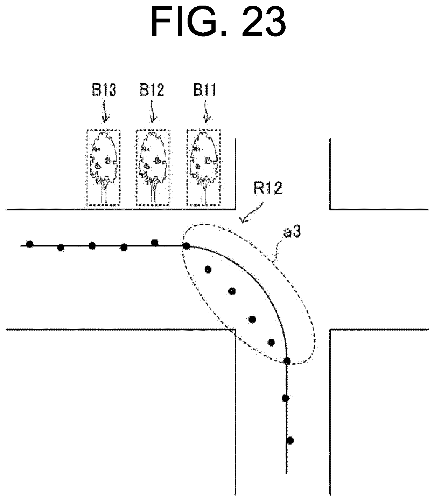

Here, it may be possible, for example, to replace the inter-field route R12 shown in FIG. 22 with the inter-field route R12 shown in FIG. 23. Specifically, the inter-field route R12 shown in FIG. 22 includes turning routes a1 and a2 each having a small turning radius. In this case, if the operator wishes to cause the work vehicle 10 to autonomously travel on a gradual turning route with a large turning radius, the operator performs editing operation on the generated inter-field route R12. For example, on the teaching operation screen D2, the operator selects the position image indicated by the position information or the line image of the generated route to perform editing operation by deleting the position image or line image, or changing the line type (straight line or curved line). This allows the operation control unit 21 to change the turning route to the turning route a3 having a larger turning radius as shown in FIG. 23.

If the inter-field route R12 is changed from the route shown in FIG. 22 to the route shown in FIG. 23, the area to be detected by the obstacle sensor 18 may be different between when the work vehicle 10 travels on the inter-field route R12 shown in FIG. 22 and when the work vehicle 10 travels on the inter-field route R12 shown the inter-field route R12 shown in FIG. 23. Therefore, for example, when the inter-field route R12 shown in FIG. 22 is set as the non-avoidance travel target, the obstacles B12 and B13 detected by the obstacle sensor 18 may be registered as the non-avoidance travel target (dotted frame area), and the obstacle B11 may not be detected by the obstacle sensor 18.

Then, in the case where the inter-field route R12 is changed to the route shown in FIG. 23, for example, if the setting contents of the non-avoidance travel target is not changed, the work vehicle 10 may detect the obstacle B11 when it turns left at an intersection during autonomous traveling on the inter-field route R12 shown in FIG. 23. In this case, since the obstacle B11 is not registered as the non-avoidance travel target, it results in a problem that the work vehicle 10 executes the avoidance travel process (decelerating and stopping).

So, for example, the operation control unit 21 may cause the screen to display a message indicating that the area to be detected by the obstacle sensor 18 is changed or a message prompting the operator to execute the teaching travel again when the operation control unit 21 changes the inter-field route R12 after generating the inter-field route R12.

When the inter-field route R12 shown in FIG. 23 is changed to the inter-field route R12 shown in FIG. 22, the obstacle B11, which is registered as the non-avoidance travel target, is excluded from the area to be detected by the obstacle sensor 18. In this case, the operation control unit 21 may automatically exclude the obstacle B11 from the non-avoidance travel target instead of the above mentioned messages.

The operation terminal 20 according to the present embodiment may be mounted on the work vehicle 10 or may be disposed outside the work vehicle 10. Furthermore, each of the process units of the operation terminal 20 may be included in the vehicle control device 11 of the work vehicle 10. The autonomous travel system of the present disclosure may consist of the work vehicle 10 alone or the operation terminal 20 alone, or may include the work vehicle 10 and the operation terminal 20. Furthermore, each of the process units of the operation terminal 20 may be included in a server that can communicate with the work vehicle 10.

### Appendices

Supplementary notes will now be provided for summary of the disclosure extracted from the above mentioned embodiments. Configurations and processing functions described in additional remarks below may be selected and combined as appropriate.

### Appendix 1

An autonomous travel method including: detecting an object to be detected while a work vehicle is traveling on a connecting road that connects a first area and a second area; and causing the work vehicle to perform avoidance travel when the object to be detected is registered as an avoidance travel target that is a subject to be avoided by the work vehicle in avoidance travel thereof, and causing the work vehicle not to perform the avoidance travel when the object to be detected is registered as a non-avoidance travel target that is a subject not to be avoided by the work vehicle in avoidance travel thereof.

### Appendix 2

The autonomous travel method according to Appendix 1 further including: accepting a user's travel operation; acquiring position information of the work vehicle traveling on the connecting route based on the travel operation; acquiring position information of the object to be detected; generating an inter-area route for causing the work vehicle to travel autonomously between the first area and the second area based on the position information of the work vehicle; and storing the position information of the object to be detected in association with the inter-area route when the object to be detected is registered as the non-avoidance travel target.

### Appendix 3

The autonomous travel method according to Appendix 2 further including announcing that the object to be detected is detected when the object to be detected is detected during travel on the connecting road based on the traveling operation.

### Appendix 4

The autonomous travel method according to Appendix 2 or 3 further including: inquiring of the user about whether or not to register the object to be detected as the non-avoidance travel target; and storing the position information of the object to be detected in association with the inter-area route when a command issued by the user to register the object to be detected as the non-avoidance travel target is obtained.

### Appendix 5

The autonomous travel method according to any one of Appendices 2 to 4 further including: inquiring of the user about whether or not to register each one of a plurality of objects to be detected as the non-avoidance travel target when the plurality of objects to be detected are detected; and storing the position information of the object to be detected selected by the user out of the plurality of objects to be detected in association with the inter-area route.

### Appendix 6

The autonomous travel method according to any one of Appendices 2 to 5 further including causing a user terminal to display information indicating that the object to be detected is detected in a display mode corresponding to a distance from the work vehicle to the object to be detected when the object to be detected is detected during travel on the connecting road based on the travel operation.

### Appendix 7

The autonomous travel method according to any one of Appendices 2 to 6 further including storing information about a type of the object to be detected in association with the position information of the object to be detected when the object to be detected is detected during travel on the connecting road based on the travel operation.

### Appendix 8

The autonomous travel method according to any one of Appendices 2 to 7 further including causing the work vehicle not to perform the avoidance travel when the work vehicle detects the object to be detected during autonomous travel on the inter-area road as well as a position of the object to be detected is included in the position information of the object to be detected that is associated with the inter-area route.

### Appendix 9

The autonomous travel method according to any one of Appendices 2 to 8 further including: inquiring of the user about whether or not to register the object to be detected as the non-avoidance travel target when the work vehicle detects the object to be detected that is not associated with the inter-area route during autonomous travel on the inter-area route; and storing the position information of the object to be detected in association with the inter-area route when a command issued by the user to register the object to be detected as the non-avoidance travel target is obtained.

### Appendix 10

The autonomous travel method according to any one of Appendices 2 to 9 further including: inquiring of the user about whether or not to exclude the object to be detected from the non-avoidance travel target when the work vehicle does not detect the object to be detected that is associated with the inter-area route during autonomous travel on the inter-area route; and deleting the position information of the object to be detected that is associated with the inter-area route when a command issued by the user to exclude the object to be detected from the non-avoidance travel target is obtained.

### Appendix 11

The autonomous travel method according to any one of Appendices 2 to 10 further including: inquiring of the user about whether or not to register a second object to be detected as the non-avoidance travel target when the work vehicle detects the second object to be detected that is of a different type from a first object to be detected that is associated with the inter-area route during autonomous travel on the inter-area route; and deleting the position information of the first object to be detected that is associated with the inter-area route and storing the position information of the second object to be detected in association with the inter-area route when a command issued by the user to register the second object to be detected as the non-avoidance travel target is obtained.

### REFERENCE SIGNS LIST

- 1: Autonomous travel system
- 10: Work vehicle
- 11: Vehicle control device
- 17: Detection process device
- 18: Obstacle sensor
- 20: Operation terminal
- 21: Operation control unit
- 111: Travel processor
- 171: Acquisition process unit
- 172: Detection processor
- 173: Output process unit
- 211: Setting process unit
- 212: Reception process unit
- 213: Acquisition process unit
- 214: Generation process unit
- 215: Output process unit
- B1: Obstacle (object to be detected)
- B2: Obstacle (object to be detected)
- F1: Field (first area)
- F2: Field (second area)
- R0: Road (connecting road)
- R1: Target route
- R2: Target route
- R12: Inter-field route (inter-area route)
- E1: Inter-field route information table
- E2: Obstacle information table

## Claims

1. An autonomous travel method comprising:
detecting an object to be detected while a work vehicle is traveling on a connecting road that connects a first area and a second area; and
causing the work vehicle to perform avoidance travel when the object to be detected is registered as an avoidance travel target that is a subject to be avoided by the work vehicle in avoidance travel thereof, and causing the work vehicle not to perform the avoidance travel when the object to be detected is registered as a non-avoidance travel target that is a subject not to be avoided by the work vehicle in avoidance travel thereof.

2. The autonomous travel method according to claim 1 further comprising:
accepting a user's travel operation;
acquiring position information of the work vehicle traveling on the connecting route based on the travel operation;
acquiring position information of the object to be detected;
generating an inter-area route for causing the work vehicle to travel autonomously between the first area and the second area based on the position information of the work vehicle; and
storing the position information of the object to be detected in association with the inter-area route when the object to be detected is registered as the non-avoidance travel target.

3. The autonomous travel method according to claim 2 further comprising announcing that the object to be detected is detected when the object to be detected is detected during travel on the connecting road based on the traveling operation.

4. The autonomous travel method according to claim 3 further comprising:
inquiring of the user about whether or not to register the object to be detected as the non-avoidance travel target; and
storing the position information of the object to be detected in association with the inter-area route when a command issued by the user to register the object to be detected as the non-avoidance travel target is obtained.

5. The autonomous travel method according to claim 4 further comprising:
inquiring of the user about whether or not to register each one of a plurality of objects to be detected as the non-avoidance travel target when the plurality of objects to be detected are detected; and
storing the position information of the object to be detected selected by the user out of the plurality of objects to be detected in association with the inter-area route.

6. The autonomous travel method according to claim 3 further comprising
causing a user terminal to display information indicating that the object to be detected is detected in a display mode corresponding to a distance from the work vehicle to the object to be detected when the object to be detected is detected during travel on the connecting road based on the travel operation.

7. The autonomous travel method according to claim 2 further comprising
storing information about a type of the object to be detected in association with the position information of the object to be detected when the object to be detected is detected during travel on the connecting road based on the travel operation.

8. The autonomous travel method according to any one of claims 2 to 7 further comprising
causing the work vehicle not to perform the avoidance travel when the work vehicle detects the object to be detected during autonomous travel on the inter-area road and when a position of the object to be detected is included in the position information of the object to be detected that is associated with the inter-area route.

9. The autonomous travel method according to claim 8 further comprising:
inquiring of the user about whether or not to register the object to be detected as the non-avoidance travel target when the work vehicle detects the object to be detected that is not associated with the inter-area route during autonomous travel on the inter-area route; and
storing the position information of the object to be detected in association with the inter-area route when a command issued by the user to register the object to be detected as the non-avoidance travel target is obtained.

10. The autonomous travel method according to claim 8 further comprising:
inquiring of the user about whether or not to exclude the object to be detected from the non-avoidance travel target when the work vehicle does not detect the object to be detected that is associated with the inter-area route during autonomous travel on the inter-area route; and
deleting the position information of the object to be detected that is associated with the inter-area route when a command issued by the user to exclude the object to be detected from the non-avoidance travel target is obtained.

11. The autonomous travel method according to claim 8 further comprising:
inquiring of the user about whether or not to register a second object to be detected as the non-avoidance travel target when the work vehicle detects the second object to be detected that is of a different type from a first object to be detected that is associated with the inter-area route during autonomous travel on the inter-area route; and
deleting the position information of the first object to be detected that is associated with the inter-area route and storing the position information of the second object to be detected in association with the inter-area route when a command issued by the user to register the second object to be detected as the non-avoidance travel target is obtained.

12. An autonomous travel system comprising:
a detection processor to detect an object to be detected while a work vehicle is traveling on a connecting road that connects a first area and a second area; and
a travel processor to cause the work vehicle to perform avoidance travel when the object to be detected is registered as an avoidance travel target that is a subject to be avoided by the work vehicle in avoidance travel thereof, and to cause the work vehicle not to perform the avoidance travel when the object to be detected is registered as a non-avoidance travel target that is a subject not to be avoided by the work vehicle in avoidance travel thereof.

13. An autonomous travel program for causing one or more processors to execute a procedure comprising:
detecting an object to be detected while a work vehicle is traveling on a connecting road that connects a first area and a second area; and
causing the work vehicle to perform avoidance travel when the object to be detected is registered as an avoidance travel target that is a subject to be avoided by the work vehicle in avoidance travel thereof, and causing the work vehicle not to perform the avoidance travel when the object to be detected is registered as a non-avoidance travel target that is a subject not to be avoided by the work vehicle in avoidance travel thereof.
